# EUROPEAN PATENT APPLICATION

(11) **EP 3 553 332 A1**
(43) Date of publication of application: **16.10.2019**
(21) Application number: 18787640.4
(22) Date of filing: 19.03.2018
(51) Int. Cl.: F16C 11/10, A47C 7/50, A47C 7/54

(54) **ANGLE ADJUSTMENT TOOL**

(30) Priority: 20.04.2017 JP 2017083777
(71) Applicant: Koyo Corporation, Osaka 5938312 (JP)
(72) Inventor: YAMASHITA,Tadanobu, Sakai-shi Osaka 593-8303 (JP)
(74) Representative: Müller, Enno
(86) International application number: PCT/JP2018/010909
(87) International publication number: WO 2018/193778

(57) **Abstract**

The present invention provides an angle adjustment metal fitting which can release the rotation restriction when a desired overload or more is exerted on the rotation in the restricting direction. The angle adjustment tool includes: a movement space formed along an outer periphery of a gear portion configured to rotate about an axis; and a floating wedge member including a tooth surface disposed in the movement space, the tooth surface capable of meshing with the gear portion and an abutting surface capable of abutting on and separating from an edge portion side of the movement space on a radially opposite side of the gear portion. The floating wedge member locks one direction of rotation about the axis of the gear portion by the abutting surface abutting on the edge portion side of the movement space to maintain a state in which the tooth surface meshes with the gear portion, and when an abutting force from the abutting surface becomes a predetermined value or more in a locked state, the floating wedge member releases a lock with an elastic force of elastic means disposed radially outward from the abutting surface causing the movement space to expand radially outward.

## Description

### TECHNICAL FIELD

The present invention relates to an angle adjustment metal fitting that releases restrictions and prevents breakage when a predetermined overload or more is applied in a state where rotation is restricted.

### BACKGROUND ART

For example, a chair, a sofa, or the like having a back portion and a seat portion includes metal fittings having an angle adjustment function (angle adjustment tool) between the back portion and the seat portion so that an inclination angle of the back portion can be adjusted. A conventional angle adjustment tool is configured to pivotally support, in a case portion of a member connected to one side (the seat portion side or the like) (first arm), a gear of a member on the other side (the back portion side or the like) (second arm) and a claw piece and to inhibit swinging of both members in an unfolding direction (a falling direction of the back portion or the like) with engagement of the claw piece with the gear (see, for example, Patent Literature 1).

In the case of the angle adjustment tool in Patent Literature 1, since a large force such as a force for supporting the weight of a person is applied, the claw pieces and the teeth of gears are large, the tooth pitch of the gear is also rough, and the size of the angle adjustment tool cannot be reduced. As a result, there have been problems that the storage case portion of the claw piece and the gear becomes large and that the angle cannot be finely adjusted due to the small number of teeth of the gear.

On the other hand, in the angle adjustment tool proposed in Patent Literature 2, a movement space along the outer periphery of the gear member and a floating wedge member for meshing with the gear member are provided, and when the gear member rotates in one direction, the tooth surface of the gear member climbs over the tooth surface of the floating wedge member in the movement space, so that the rotation of the gear member is enabled, and when the gear member attempts to rotate in the opposite direction, the tooth surface of the gear member meshes with the tooth surface of the floating wedge member, so that the rotation of the gear member is locked, whereby the rotation (swinging) in one direction is freely performed and the rotation (swinging) in the opposite direction is prevented. This angle adjustment tool is advantageous in that the number of stages for switching the angle can be increased, the size can be reduced, and further, the noise during angle adjustment can be reduced.

However, in the case of the angle adjustment tool in Patent Literature 2, in the state where the rotation is prevented by being locked, a top priority is given to maintaining a fixed state without unlocking even when an overload is applied. As a result, the angle adjustment tool requires strength enough to withstand overload, and necessarily, there is a limit to miniaturization of the angle adjustment tool, so that it is considered that overload beyond expectation may be applied and the angle adjustment tool may be broken.

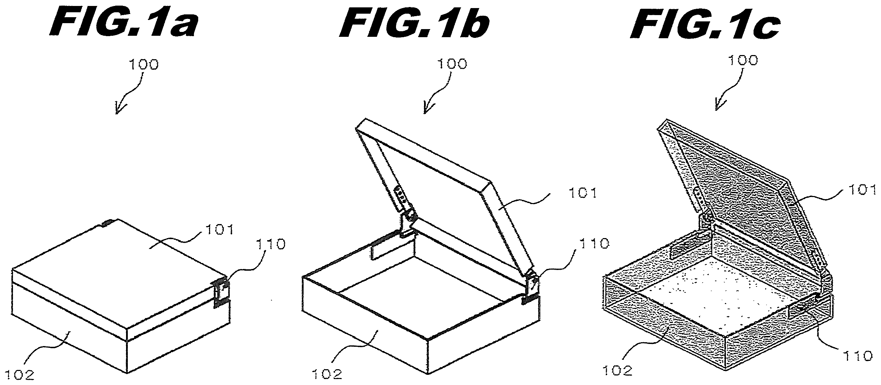

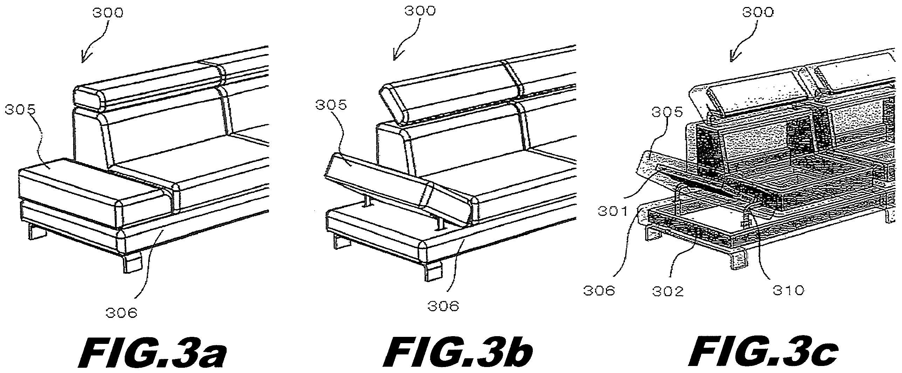

On the other hand, when the angle adjustment tool is used for furniture and the like as shown in Figs. 1(a) to 3(c), a large force that directly supports the user from the seat portion to the back portion is not applied, so that there is no problem in terms of safety even if the lock is released and the angle adjustment tool is swingable (rotatable) when overload beyond expectation is applied. In this case, rather than maintaining the lock, eliminating the possibility that the whole angle adjustment tool will be damaged due to maintaining the lock is considered to be more important. In addition, the size of the angle adjustment tool greatly affects the size of furniture and the like using the angle adjustment tool, and it is desired that the size of the angle adjustment tool be further reduced.

### CITATIONS LIST

### PATENT LITERATURES

Patent Literature 1: Japanese Examined Utility Model Application Publication No. 59-20118
Patent Literature 2: Japanese Patent No. 3766669

### SUMMARY OF INVENTION

### TECHNICAL PROBLEMS

The present invention has been made in view of the above circumstances, and an object thereof is to provide an angle adjustment tool that, in a state in which the number of angle switching stages is increased and the noise during angle adjustment is reduced, releases the rotation (swinging) restriction when rotation (swinging) is restricted and when a predetermined overload or more is applied, and can prevent breakage of the tool.

### SOLUTIONS TO PROBLEMS

The angle adjustment tool of the present invention includes: a gear member configured to rotate about an axis (for example, see the gear members 24, 124, 624, 724, and the like in this embodiment); a movement space formed along an outer periphery of the gear member (radially outside position) (for example, see the movement spaces 23, 123, and the like in this embodiment); and a floating wedge member including a tooth surface disposed in the movement space, the tooth surface capable of meshing with the gear member and an abutting surface capable of abutting on and separating from an edge portion side of the movement space on a radially opposite side of the gear member (on the side opposite to the radial direction). In addition, the floating wedge member locks one direction of rotation about the axis of the gear member by the abutting surface abutting on the edge portion side of the movement space to maintain a state in which the tooth surface meshes with the gear member, and when an abutting force from the abutting surface becomes a predetermined value or more in a locked state, the floating wedge member releases a lock with an elastic force of elastic means (there is a case where the insertion members 14, 114, 714, 814, and the like as separate members in this embodiment are elastically deformed, or there is a case where the cover member 612 itself is formed of an elastic material and elastically deformed without a separate elastic member) causing the movement space to expand radially outward.

Specifically, the edge portion side of the movement space is formed with a member for sandwiching the gear portion from both sides in an axial direction or a part of the member (for example, see a case where the cover member 612, the second arm 711, and the insertion member 714 are integrally formed in this embodiment), and the member for sandwiching the gear portion or the part of the member is formed of an elastic material having more flexibility than the gear portion and the floating wedge member, and the sandwiching member itself may be elastically deformed to release the lock.

With this angle adjustment tool, as described in Patent Literature 2, the movement space along the outer periphery of the gear member in the movement space and the floating wedge member for meshing with the gear member are provided, and when the gear member attempts to rotate, the gear member meshes with the tooth surface of the floating wedge member and is locked, and when a larger load (rotational force) is applied in the locked state, the resilient means contracts to expand the movement space, thereby releasing the lock between the floating wedge member and the gear member and preventing breakage of the angle adjustment tool.

According to this angle adjustment tool, it is possible to automatically release the lock when an overload is applied, to prevent breakage of the gear member, the tooth surface of the floating wedge member, and other parts due to overload, and to provide an angle adjustment tool highly durable with respect to frequency of use. This also makes it possible to miniaturize the gear member, the swing arm connected with the angle adjustment tool (for example, see the first arms 13, 113, and the like, the second arms 11, 111, and the like in this embodiment), and the like. In particular, this angle adjustment tool is advantageous for use in places, such as the arm rest for furniture, where the problem of releasing the lock is small for safety reasons and priority is given to demands for miniaturization.

In addition, as in Patent Literature 2, it is preferable that, in the angle adjustment tool, when a rotation in an opposite direction from the one direction in which the lock is made exceeds a predetermined angle, the gear member includes a push-out protruding portion configured to push out the floating wedge member in the opposite direction, the movement space includes a retraction space for accommodating the floating wedge member pushed out by the push-out protruding portion and releasing a meshed state between a tooth surface of the floating wedge member and the gear member, and the gear member includes a push-back protruding portion for pushing back the floating wedge member accommodated in the retraction space portion and for causing the tooth surface of the floating wedge member to mesh with the gear member when rotation is made in the one direction.

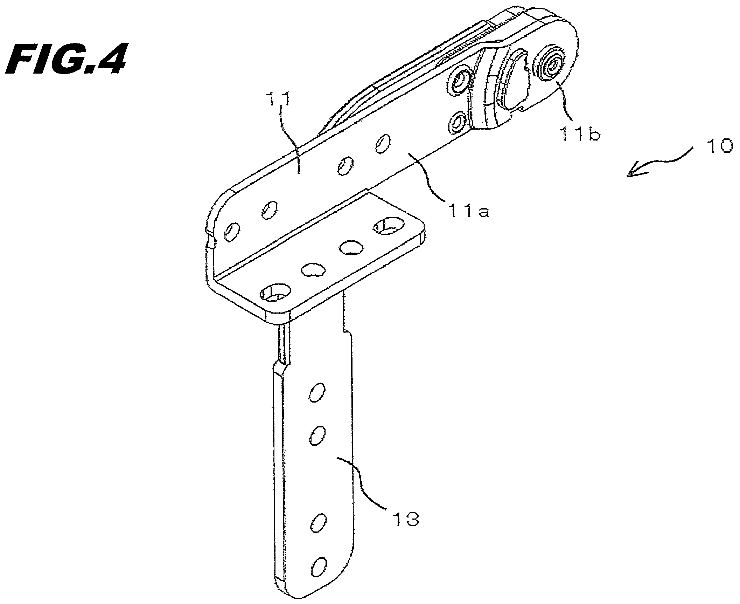

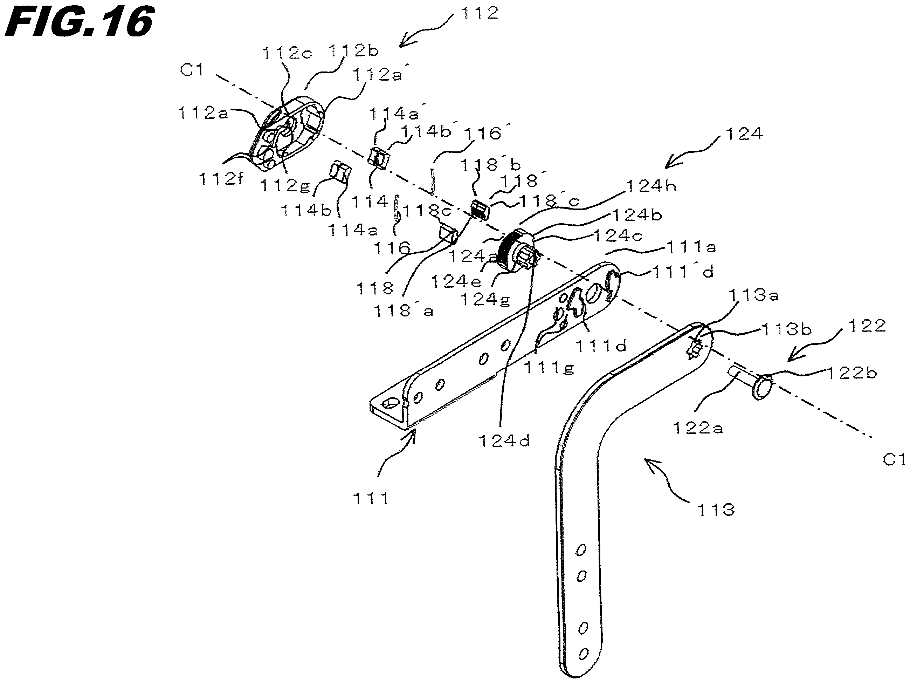

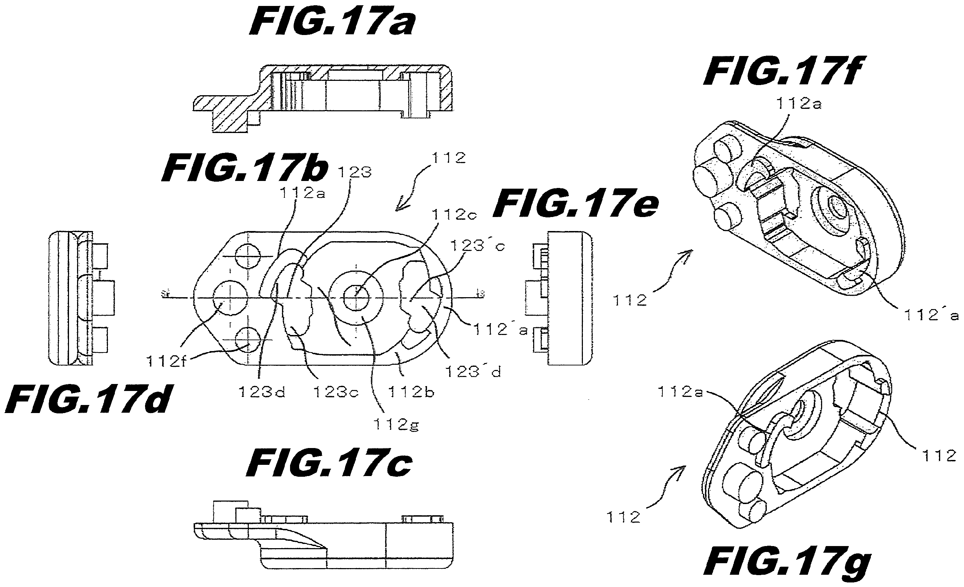

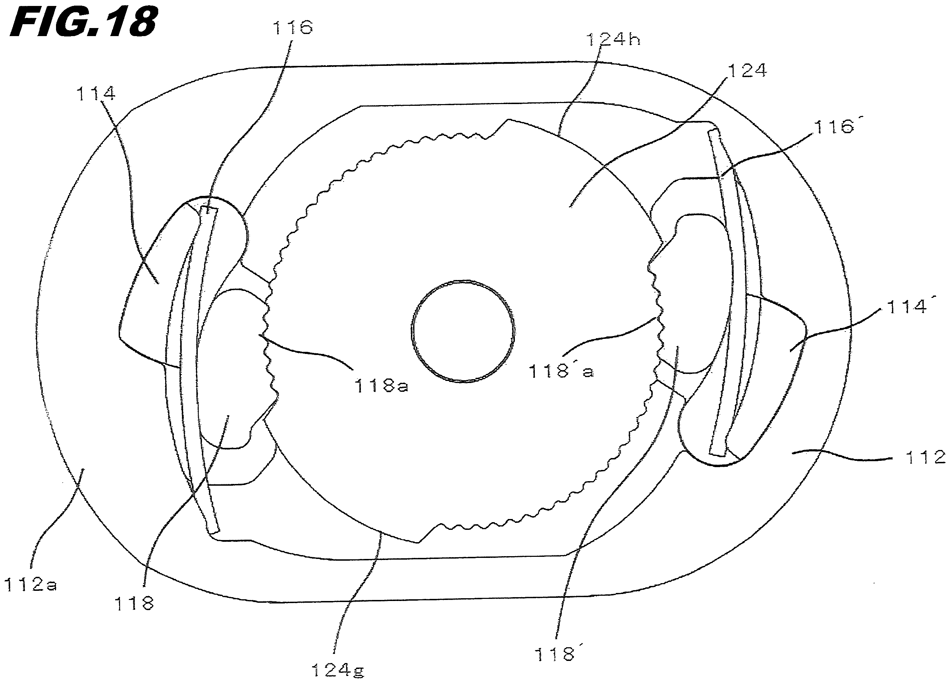

Furthermore, as a first specific example of this angle adjustment tool, as illustrated in Figs. 4 to 14, 15 to 18, and 24 to 25, the movement space is formed of a protruding member and a recess member (for example, see the protruding portions 12a and 112a, the receiving portions 11d and 111d in the embodiment), fittable to each other, in respective members sandwiching the gear portion from both sides in the axial direction (for example, see the connecting portion 11b, the tip region 111a of the second arm 111, and the cover members 12 and 112 in the embodiment), and an elastic member disposed between the protruding member and the abutting surface of the floating wedge member (for example, see the insertion members 14 and 114 in the embodiment), and in an edge portion of the movement space, the protruding member receives an abutting force from the abutting surface of the floating wedge member via the elastic member.

According to this example, the recess member and the protruding member to be fitted to each other are provided in respective members sandwiching the gear member from both sides, and the movement space is formed by fitting the recess member and the protruding member. By adopting this configuration, since the recess member and the protruding member to be firmly fitted to each other are provided in the members themselves sandwiching the gear member from both sides, and the movement space is formed with these members, it is sufficient to simply include parts that sandwich the gear member from both sides, so that an angle adjustment tool that can be greatly reduced in the number of parts and easily assembled can be provided. Furthermore, in the case of this angle adjustment tool, the recess member and the protruding member are firmly fitted to each other to reinforce each other to secure strength, thereby capable of further improving the durability and miniaturization.

In addition, it is preferable that the elastic means is integrally formed with resilient means configured to abut on the floating wedge member to impart a radial elastic force to the floating wedge member (for example, see the rear edge portion 514c of the insertion member 514, the protruding portion 612h of the cover member 612, and the resilient means 814a of the insertion member 814 in this embodiment).

In the conventional angle adjustment tool, in order to prevent the floating wedge member from falling off when the lock of the floating wedge member is released, a resilient member for imparting a radial elastic force between the edge portion of the movement space and the abutting surface of the floating wedge member (for example, see the resilient members 16, 116, 216, 316, 416, and 716 in this embodiment) is separately provided as a part. On the other hand, with this angle adjustment tool, elastic means is provided for releasing the lock when overload is applied, and the elastic means is combined with resilient means for preventing the floating wedge member from falling to be molded integrally. Thus, it is possible to eliminate the resilient means, which has been conventionally a separate member and required complicated work in the assembling process, which is greatly advantageous in that the number of parts can be reduced.

In addition, a pair of the movement spaces of the angle adjustment tool may be disposed at positions facing each other with respect to the axis of the one gear member, and the protruding member forming each of the movement spaces may be provided in one cover member for accommodating the gear member (for example, see the angle adjustment tools 20 and 70 in the embodiment).

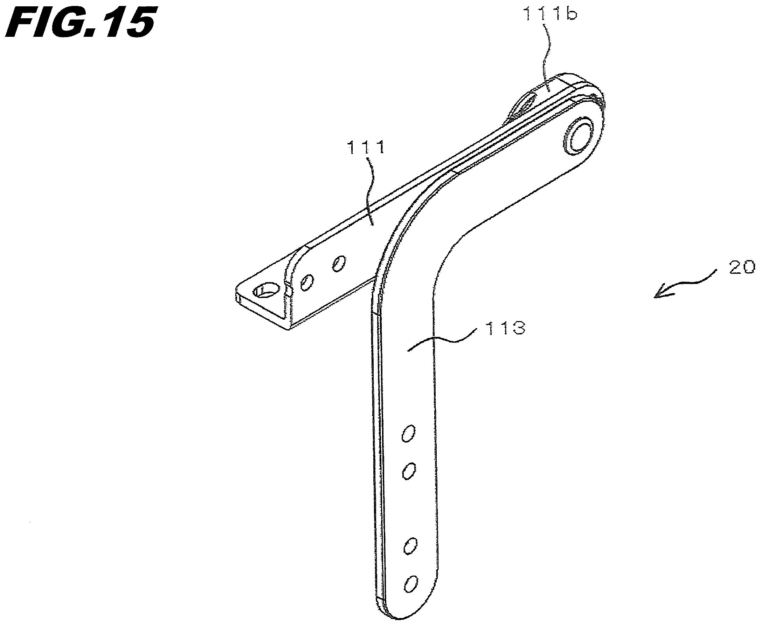

In the angle adjustment tool, as shown in Figs. 15 to 18, and 26, two movement spaces may be disposed at positions facing each other with respect to one gear member. When movement spaces are provided in facing positions and there is a floating wedge member in each of the facing positions, force acts in a dispersed manner in the symmetrical direction even when overload is applied and elastically deforms, so that a high-strength angle adjustment tool with good balance of force can be provided. It can be said that high strength makes it possible to miniaturize the angle adjustment tool.

In addition, the movement space is formed with a protruding member and a recess member, fittable to each other, in each of the members sandwiching the gear portion from both sides in the axial direction, the member in which the protruding member is to be formed for sandwiching the gear portion is formed of the elastic material, and the edge portion of the movement space may be configured such that the protruding member comes into contact with an abutting surface of the floating wedge member and receives an abutting force from the abutting surface.

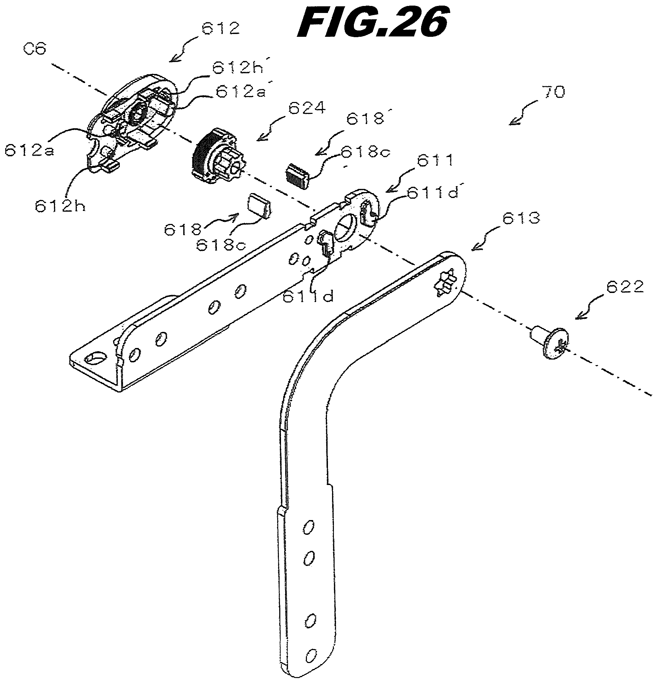

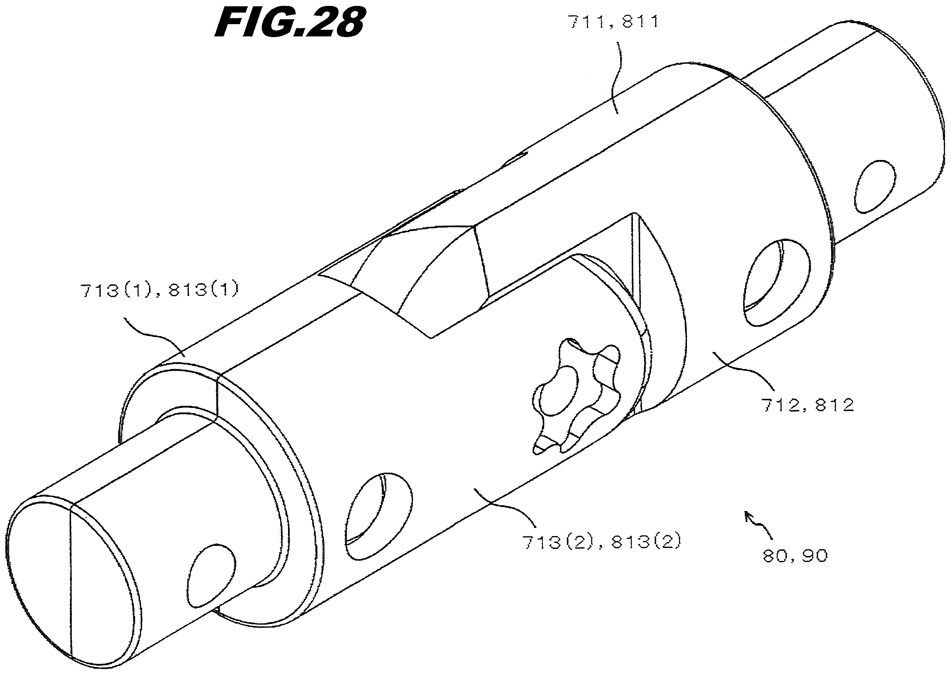

As shown in Fig. 26, the member (cover member 612) itself in which the protruding portion of the members for sandwiching the gear member is formed may be formed of an elastic material, and the member may be elastically deformed to release the lock when overload is applied. In addition, in the case of integrally forming with the members (cover members 12, 112, and 512) for sandwiching the elastic member (insertion members 14, 114, and 514) in the angle adjustment tool in Figs. 4 to 8, 15 to 18, and 24 to 25, or in the case of integrally forming with any one of the members (any one of the second arm first portion 711 (811) and the second arm second portion 712) for sandwiching the insertion members 714 and 814 in the angle adjustment tool in Figs. 28 to 31 to be described below, the member itself for sandwiching the gear member may be formed of an elastic material, and the member may be elastically deformed to release the lock when overload is applied. Thus, the number of parts of the elastic means for releasing the lock can be reduced, and the assembly process can also be facilitated.

On the other hand, as shown in Figs. 4 to 8 and 15 to 25, when a separate elastic member (insertion member) is prepared, although the number of parts is increased compared to the case where the elastic member is integrally combined with the cover member or the like as described above, the elastic modulus adjustment can be made only by selecting the material of the elastic member due to using a separate member, and there is an advantage that it is possible to adjust the stress necessary for releasing the lock by merely adjusting the elastic material.

In addition, as another specific example, it is preferable that an opening is provided in a radially outer member of the movement space, and the elastic means is inserted into the opening and contracts when a radial pressing force is applied.

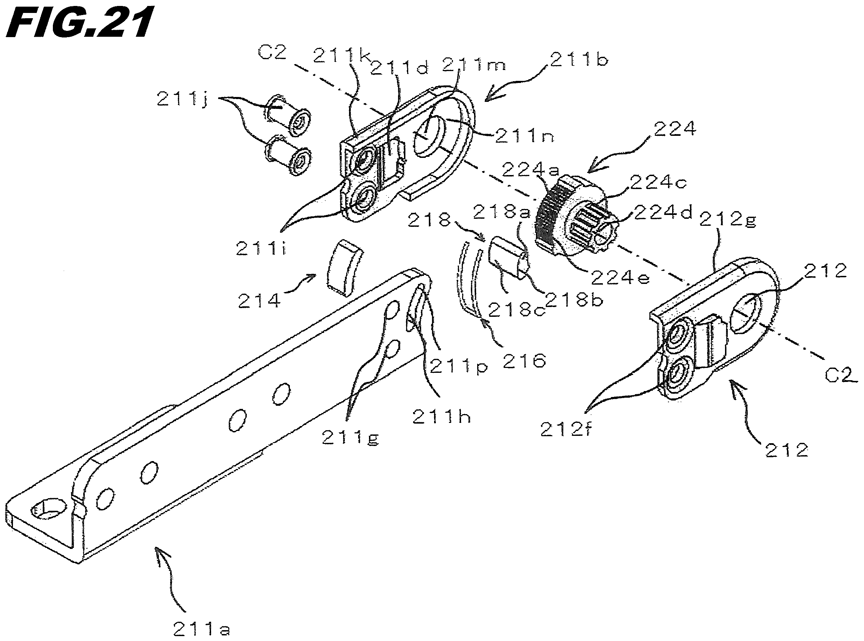

In this example, as shown in Fig. 21, an opening (for example, see the opening 211h of the second arm 211 in the embodiment) is provided in a member to be swung by the angle adjustment tool, and elastic means is inserted therein.

In addition, in yet another specific example, the elastic member may be disposed in an edge portion of the movement space along the abutting surface of the floating wedge member on the radially outer side and may contract when a radial pressing force is applied.

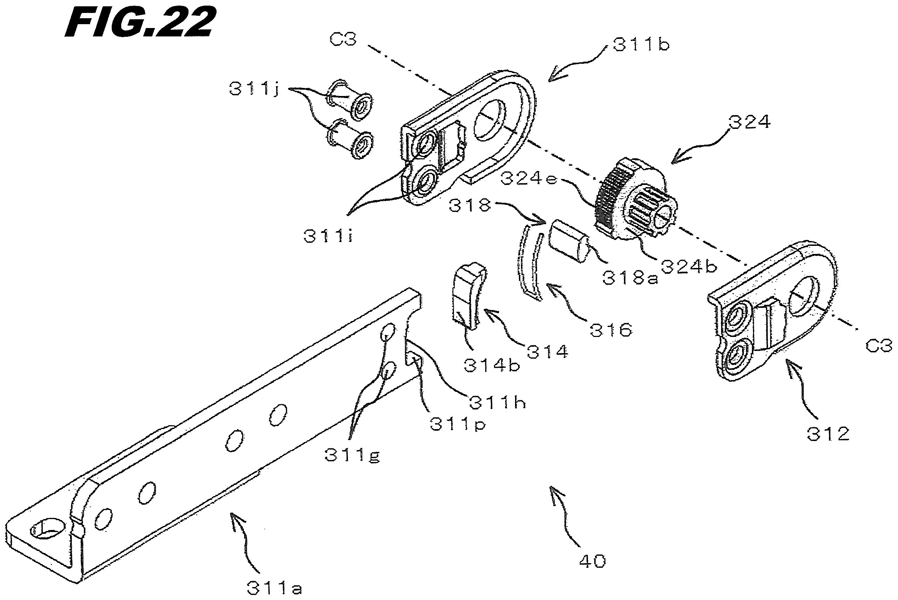

In this example, as shown in Figs. 22 to 23, the elastic member is disposed in the edge portion of the member, for example, to be swung by the angle adjustment tool (for example, see the end surfaces 311p and 411p of the flat plate portions 311a and 411a of the second arms 311 and 411 in the embodiment).

It should be noted that a member having higher rigidity than the elastic means may be disposed by removing the elastic means. In this case, it is possible to provide an angle adjustment tool in which the boundary load of unlocking can be changed only by replacing the elastic members to form members of different materials with different rigidity, and which can be used for various objects only by preparing a plurality of elastic members having the same shape and different rigidity.

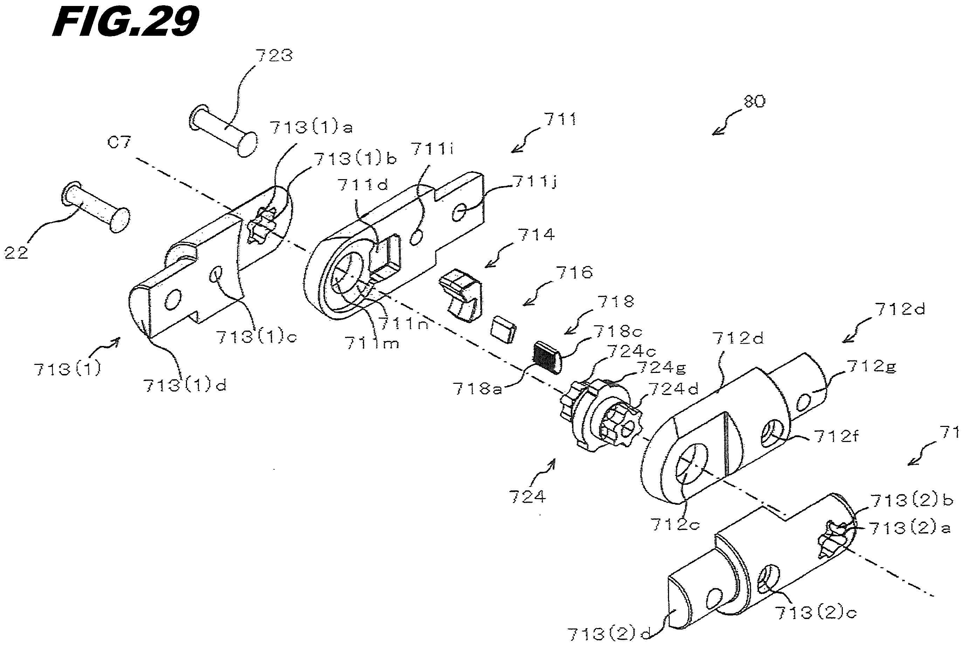

As another specific example of the present angle adjustment tool, as exemplified in Figs. 29 to 31, the movement space is formed with recesses (see, for example, recesses 711d, 712d, and the like in the embodiment) for forming one receiving space when sandwiched with the members facing each other in each or one of the members sandwiching the gear portion from both sides in the axial direction, and an elastic member fitted in the recess, the abutting surface of the floating wedge member abuts on the elastic member, and the elastic member may be elastically deformed due to the abutting force, so that the movement space may expand radially outward to release the lock.

According to this example, an elastic member of a separate member is fitted into a space (receiving space) formed by opposing recesses of members sandwiching the gear member from both sides. Then, the abutting surface of the floating wedge member is configured to be in contact with the elastic member. In the case of this configuration example, in assembly, it is sufficient to include a step of overlapping the other sandwiching member and accommodating the gear member with the elastic member fitted into the recess of one of the sandwiching members, and an angle adjustment tool which can greatly reduce the number of parts and which is easy to assemble can be provided.

### ADVANTAGEOUS EFFECTS OF INVENTION

According to the angle adjustment tool of the present invention, in a state in which an angle switching stage is increased and the noise during the angle adjustment is reduced, when the rotation (swinging) is restricted and when a predetermined overload or more is applied, rotation (swinging) restriction is released, and breakage of the tool can be prevented.

### BRIEF DESCRIPTION OF DRAWINGS

Figs. 1(a) to 1(c) show a usage example in which an angle adjustment tool according to the present invention is used.
Figs. 2(a) to 2(c) show another usage example in which the angle adjustment tool according to the present invention is used.
Figs. 3(a) to 3(c) show still another usage example in which the angle adjustment tool according to the present invention is used.
Fig. 4 shows a perspective view of an angle adjustment tool of a first embodiment.
Fig. 5 shows an assembly exploded view of the angle adjustment tool of the first embodiment.
Figs. 6(a) to 6(g) show six-sided views of a cover member of the angle adjustment tool of the first embodiment.
Fig. 7 shows a perspective view of the cover member of the angle adjustment tool of the first embodiment.
Fig. 8 shows a partial perspective view of a state in which a second arm of the angle adjustment tool of the first embodiment is removed.
Figs. 9(a) to 9(c) are schematic plan views showing the swinging of the angle adjustment tool of the first embodiment.
Figs. 10(d) to 10(f) are schematic plan views showing the swinging of the angle adjustment tool of the first embodiment.
Figs. 11(a) to 11(c) are schematic plan views showing movement of a floating wedge member during swinging of the angle adjustment tool of the first embodiment.
Figs. 12(a) to 12(c) are schematic plan views showing the movement of the floating wedge member during swinging of the angle adjustment tool of the first embodiment.
Figs. 13(a') to 13(c') respectively show positional relationship of parts in the states in Figs. 12(a) to 12(c).
Fig. 14 shows respective loads applied on parts in the states in Figs. 13(a') to 13(c').
Fig. 15 shows a perspective view of an angle adjustment tool of a second embodiment.
Fig. 16 is an assembly exploded view showing a connection between a first arm and a second arm of the angle adjustment tool of the second embodiment.
Figs. 17(a) to 17(g) show partial plan views of a state in which a cover member of the angle adjustment tool of the second embodiment is removed.
Fig. 18 shows a partial plan view of a state in which a cover member of the angle adjustment tool of the second embodiment is removed.
Fig. 19 shows a perspective view of an angle adjustment tool of a fourth embodiment.
Fig. 20 is an assembly exploded view showing a connection between a first arm and a second arm of the angle adjustment tool of the fourth embodiment.
Fig. 21 is an assembly exploded view showing the second arm, a gear member inside the second arm, and the like of the angle adjustment tool of the fourth embodiment.
Fig. 22 is an assembly exploded view showing a second arm, a gear member inside the second arm, and the like of the angle adjustment tool of the fifth embodiment.
Fig. 23 is an assembly exploded view showing a second arm, a gear member inside the second arm, and the like of the angle adjustment tool of the sixth embodiment.
Fig. 24 is an assembly exploded view showing a connection between a first arm and a second arm of an angle adjustment tool of a third embodiment.
Fig. 25 is a schematic plan view showing a state in which a gear member is arranged in a cover member of the angle adjustment tool of the third embodiment.
Fig. 26 is an assembly exploded view showing a connection between a first arm and a second arm of an angle adjustment tool of a seventh embodiment.
Fig. 27 shows a usage example in which angle adjustment tools of eighth and ninth embodiments are used.
Fig. 28 shows a perspective view of angle adjustment tools of the eighth and ninth embodiments.
Fig. 29 is an assembly exploded view showing a connection of the angle adjustment tool of the eighth embodiment.
Fig. 30 shows an exploded view of a state in which a first arm member and a second arm member of the angle adjustment tool of the eighth embodiment are removed.
Fig. 31 shows an exploded view of a state in which a first arm member and a second arm member of the angle adjustment tool of the ninth embodiment are removed.

### DESCRIPTION OF EMBODIMENTS

First, usage examples in which the angle adjustment tool according to the present invention is used will be described with reference to Figs. 1(a) to 3(c). In Figs. 1(a) to 3(c), Figs. 1(a), 2(a), and 3(a) show a state in which the angle adjustment tool is folded, Figs. 1(b), 2(b), and 3(b) show a state in which the angle adjustment tool is unfolded and the folding is restricted, and Figs. 1(c), 2(c), and 3(c) are respectively skeleton displays in the state of Figs. 1(b), 2(b), and 3(b) so that the angle adjustment tool is shown clearly.

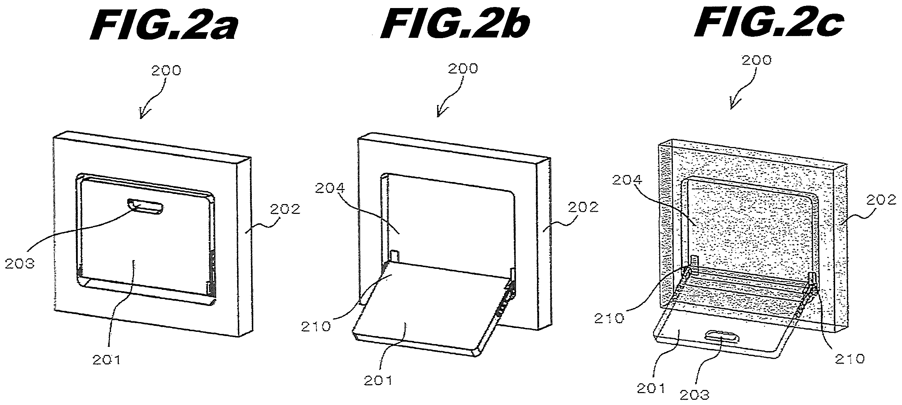

In the case of a usage example of an angle adjustment tool 110 in Figs. 1(a) to 1(c), a container 100 closed and opened with a lid is shown, and the container 100 is provided with a lid member 101 capable of closing and opening an opening with respect to a box-shaped object 102 that opens upward. The lid member 101 is opened and closed by an edge portion of one side of the lid member 101 swinging about an edge portion of one side of the box-shaped object 102 as an axis, and the angle adjustment tool 110 is provided over both sides of this axis. This angle adjustment tool 11 0 swings in the opening direction of the lid member 101, but is locked (fixed) in the closing direction, and when the angle adjustment tool 110 swings by a predetermined angle or more in the opening direction, the lock is released and the angle adjustment tool 110 swings in the closing direction. Furthermore, when a predetermined load or more is applied in the closing direction in a locked state, the lock is released and the angle adjustment tool 110 swings in the closing direction. In addition, usage examples of angle adjustment tools 210 and 310 in Figs. 2(a) to 3(c) respectively show, for example, a footrest 200 provided under the back portion of a front seat of a train and an armrest portion 305 provided on both side portions of a sofa 300.

### [First Embodiment]

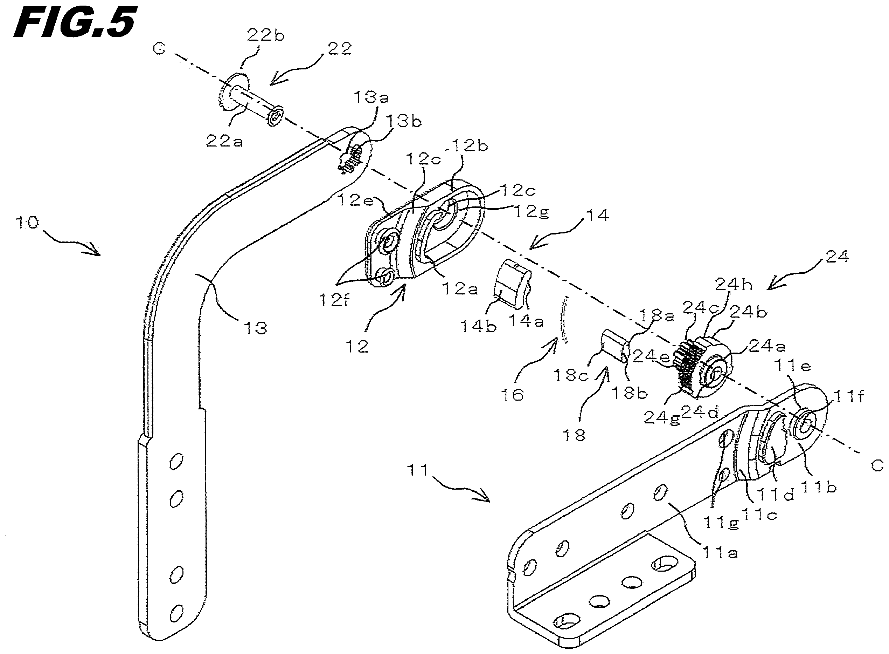

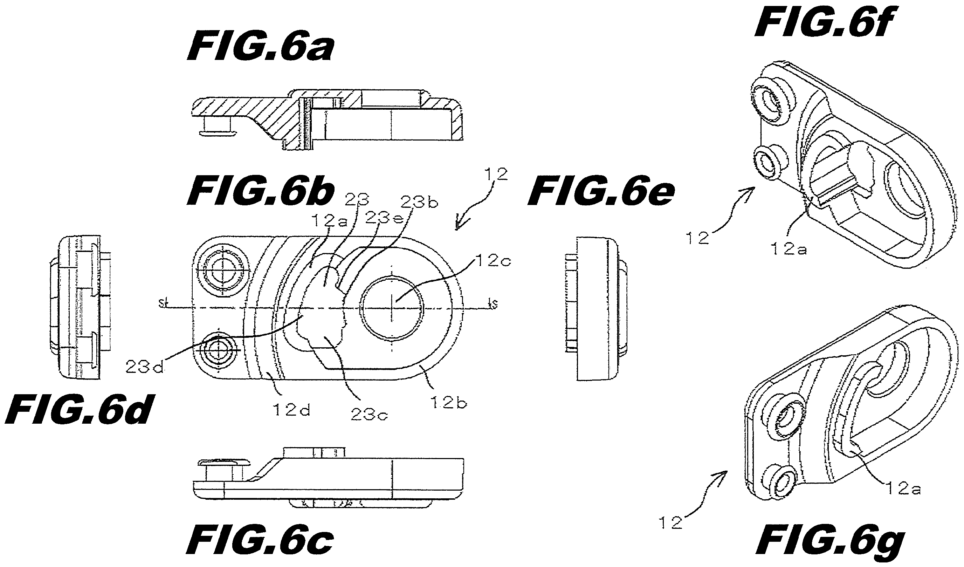

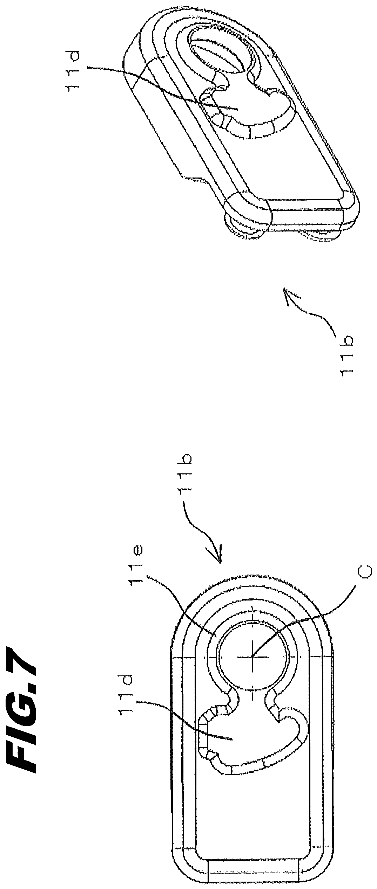

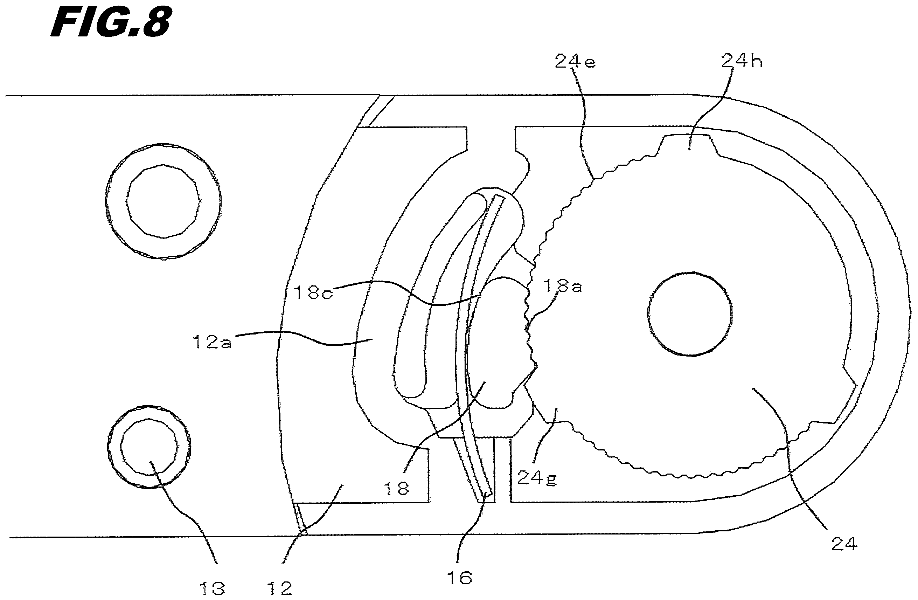

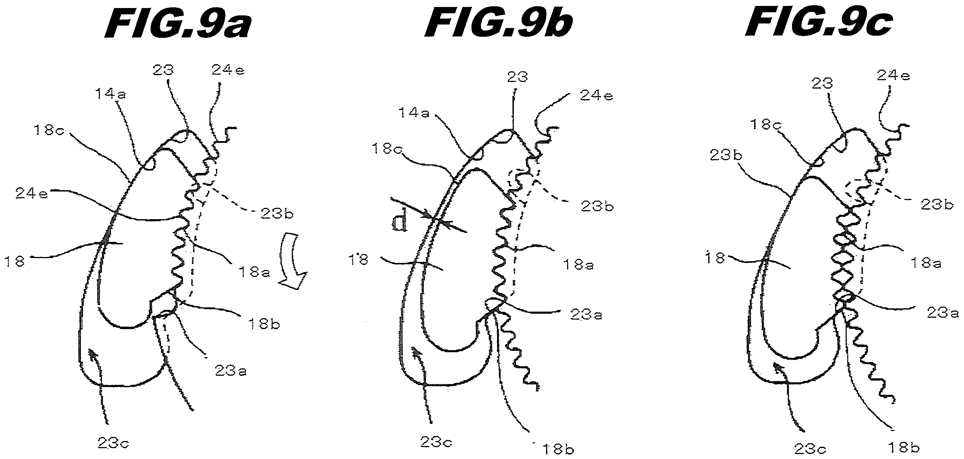

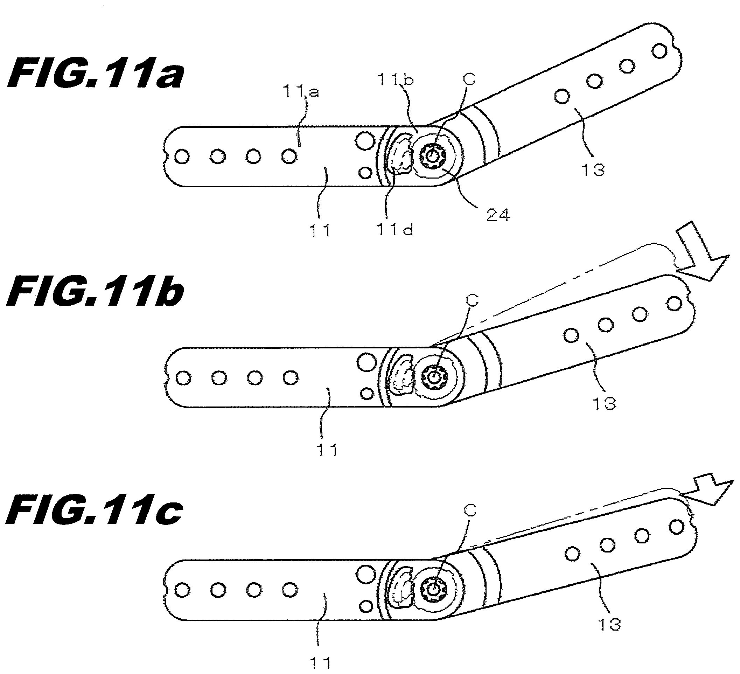

Next, an angle adjustment tool of a first embodiment according to the present invention will be described. Figs. 4 to 10(g) show an angle adjustment tool 10, and Fig. 4 shows a perspective view of the angle adjustment tool 1 0, Fig. 5 shows an assembly exploded view of the angle adjustment tool 10, Figs. 6(a) to 6(g) show six-sided views of a cover member 12 of the angle adjustment tool 10, Fig. 7 shows a perspective view of the cover member 12, and Fig. 8 shows a partial perspective view of a state in which a second arm of the angle adjustment tool 1 0 is removed. Furthermore, Figs. 9(a) to 10(f) are schematic plan views showing the swinging of the angle adjustment tool 10, and Figs. 11(a) to 12(c) are schematic plan views showing movement of a floating wedge member 18 during the swinging of the angle adjustment tool 10.

As shown in Fig. 5, the angle adjustment tool 10 includes eight members, i.e., a screw 22, a first arm 13, a cover member 12, a floating wedge member 14, a resilient member 16, a gear member 24, and a second arm 11. In the description referring to Fig. 5, an X direction, a Y direction, and a Z direction respectively denote an axis C direction, an upward direction perpendicular to the axis C, and a horizontal direction with respect to the axis C (the direction perpendicular to the Y direction around the axis C).

First, the second arm 11 is provided with a connecting portion 11b that is offset outward in the axis C direction (see an offset portion 11c) with respect to a flat plate portion 11a around the axis C. The connecting portion 11b includes a receiving portion 11d which protrudes outward in the axis C direction on the offset portion 11c side and forms a recess as seen from the inside of the axis C direction, and a counterbore portion 11e which protrudes outward in the axis C direction and forms a recess as seen from the inside of the axis C direction. The counterbore portion 11e is provided with a through hole 11f centered on the axis C.

The gear member 24 is a rotation body having a through hole 23d along the axis C and rotating around the axis C, and is integrally formed with a protruding portion 24a, a gear portion main body 24b, and a fitting portion 24c each being substantially cylindrical in the order from the first arm 13 side. The outer diameter of the protruding portion 24a and the inner diameter of the counterbore portion 11e of the first arm 13 are substantially the same, and the protruding portion 24a is received in the counterbore portion 11e to abut against each other. The gear portion main body 24c has a diameter larger than that of the protruding portion 24d and is provided with a tooth surface 24e in an axial direction on the outer peripheral surface thereof. Furthermore, the fitting portion 24c has a diameter smaller than that of the gear portion main body 24b, and is provided with a fitting groove 24f in the axial direction on the outer peripheral surface thereof.

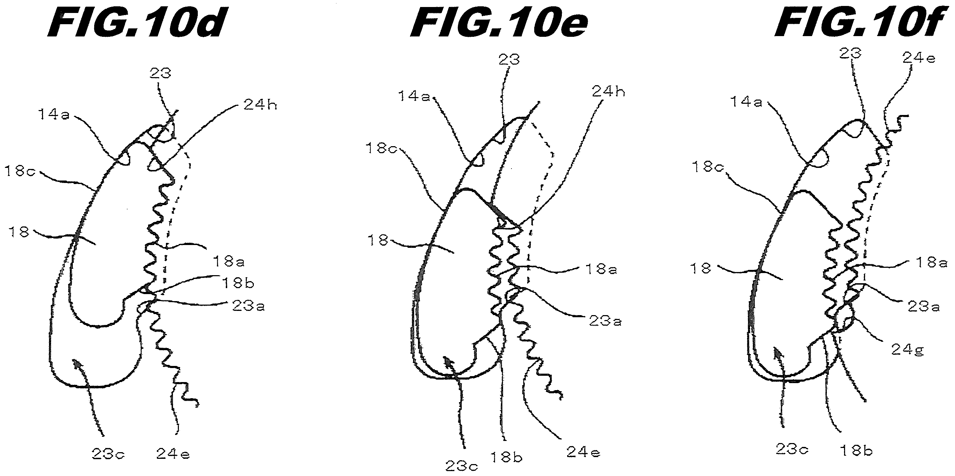

As shown in Figs. 10(d)to 10(f) to be described below, the floating wedge member 18 is provided with a tooth surface 18a for meshing with the tooth surface 24e and a cutout portion 18b on the outer peripheral surface on the tooth surface 24e side of the gear member 24, and is provided with an abutting portion 18c for abutting on the insertion member 14 on the outer peripheral surface on the opposite side in the Z direction from the tooth surface 24e of the gear member 24. In addition, as shown in Figs. 10(d) to 10(f), the insertion member 14 also includes an abutting portion 14a for abutting on the abutting portion 18c of the floating wedge member 24, and a support surface 14b in contact with the protruding wall 12a of the cover member 12 on the opposite side in the Z direction therefrom. A resilient member 16 extending in the peripheral direction is placed between the abutting portion 18c of the floating wedge member 14a and the abutting portion 14a of the insertion member 14.

The cover member 12 is a member overlapped with the second arm 11 in the axis C direction, and a member for sandwiching the gear member 24, the floating wedge member 18, the resilient member 16, and the insertion member 14 between the cover member 12 and the second arm 11. The cover member 12 includes a fixing surface 12e for overlapping with the flat plate surface 11a of the second arm 11, and includes an outer peripheral frame 12b and an offset frame 12d so as to abut on the connecting portion 11c of the second arm 11. The height of the outer peripheral frame 12b and the offset frame 12d with respect to the fixing surface 12e (height in the axis C direction) substantially coincides with the offset height of the second arm 11, and both are connected to each other to form a recess portion 12g in the cover member 12. In addition, the recess portion 12g is provided with a through hole 12c in the bottom portion.

When the cover member 12 is overlapped with the second arm 11, the fitting portion 24c of the gear member 24 passes through the through hole 12c, and the bottom portion of the recess portion 12g serves as a counterbore portion to enable the rotation of the gear portion main body 24b around the axis C. In addition, the recess portion 12g of the cover member 12 is provided with a frame-shaped protruding portion 12a that is substantially arranged in parallel toward the offset frame 12d and stands at substantially the same height as the outer peripheral frame 12b from the bottom surface of the recess portion 12g. When the cover member 12 is overlapped with the second arm 11, the protruding portion 12a abuts on the support surface 14b to receive the insertion member 14. Furthermore, when the cover member 12 is overlapped with the second arm 11, the screw 12f protruding from the fixing surface 12e is inserted into the through hole 11g of the flat plate portion 11a of the second arm 11, whereby the cover member 12 and the second arm 11 are fixed.

The first arm 13 is a flat plate member provided with a through hole 13a centered on the axis C, and the inner wall of the through hole 13a is provided with a fitting groove 13b for meshing with the fitting groove 24f of the fitting portion 24c of the gear member 24. When the cover member 12 is overlapped with the second arm 11 with the gear member 24, the floating wedge member 18, the resilient member 16, and the insertion member 14 sandwiched between the cover member 12 and the second arm 11, the fitting portion 24c of the gear member 24 protrudes from the cover member 12, and the fitting groove 24f of the protruding fitting portion 24c meshes with the fitting groove 13b of the through hole 13a of the first arm 13 to be fixed. As a result, when the first arm 13 is rotated about the axis C, the gear member 24 also rotates in cooperation therewith.

Furthermore, inserting the screw 22 from the outer side in the X direction along the axis C of the first arm 13, caulking the tip protruding from the protruding portion 11e caused by the shaft member 22a passing through the through holes 13b, 12c, 24d, and 11f, and sandwiching the first arm 12, the cover member 12, the floating wedge member 14, the resilient member 16, the gear member 24, and the second arm 11 between the caulked tip and the seat portion 22b completes the assembly of the angle adjustment tool 10.

Next, first, the positional relationship between the floating wedge member 18 and the insertion member 14 with respect to the rotation of the gear member 24 when there is no elastic deformation by the insertion member 14 will be described with reference to Figs. 9(a) to 10(f), and thereafter, the state in which, when the overload is applied, the insertion member 14 elastically deforms and the meshing between the tooth surface 24e of the gear member 24 and the tooth surface 18a of the floating wedge member 18 is released will be described with reference to Figs. 11(a) to 12(c).

In Fig. 9(a), the floating wedge member 18 meshes with the gear member 24 and abuts on the abutting portion 14c of the insertion member 14, so that the first arm 13 does not further swing clockwise in Fig. 5 (locked). When the first arm 13 is further swung clockwise from this state, as shown in Fig. 9(b), the abutting surface 18c of the floating wedge member 18 that is resiliently urged to the gear member 24 by the resilient member 16 (see Fig. 5) to mesh with the tooth surface 24e separates from the abutting portion 14a of the insertion member 14, and a slight gap d is generated between the abutting surface 18c and the abutting portion 14a. Then, when the first arm 13 further swings clockwise, as shown in Fig. 9(c), the cutout portion 18b of the floating wedge member 18 abuts on the abutting step portion 11r of the receiving portion 11d, the tooth surface 18a of the floating wedge member 18 can separate from the tooth surface 24e of the gear member 24 with the gap d, and the tooth surface 18a of the floating wedge member 18 can climb over the tooth surface 24e of the gear member 24 with a ticking sound.

The cutout portion 18b of the floating wedge member 18 is formed at the rear edge portion of the tooth surface 18a of the floating wedge member 18, and the abutting step portion 11r of the receiving portion 11d is formed so as to be capable of abutting on the cutout portion 18b on the arcuate surface 23b on the inner side of the movement space 23.

Therefore, the tooth surface 18a meshes with the gear member 24 and the abutting surface 18c abuts on the abutting portion 14a, and due to the wedge action of the floating wedge member 24 sandwiched between the gear member 24 and the abutting portion 14a8, the floating wedge member 18 prevents the first arm 13 from swinging in the unfolding direction with respect to the second arm 11. That is, the first arm 13 and the second arm 11 can be maintained at any folding angle (inclination angle).

Then, as shown in Fig. 10(d), the gear member 24 includes a push-back projection 24h that presses the floating wedge member 18 in the folding direction when the first arm 13 swings to the maximum folding state beyond the predetermined folding angle with respect to the second arm 11. That is, the push-back projection 24h is formed on one end side of the gear member 24 (tooth forming portion), and in this state, the push-back projection 24h abuts on the front edge portion of the tooth surface 24e of the floating wedge member 24.

Then, as shown in Fig. 10(e), when the first arm 13 is further swung in the folding direction from the maximum folded state, the floating wedge member 18 (cutout portion 18b) pushed back by the push-back projection 24h climbs over the step portion 23a and is accommodated in the retraction space portion 23c of the movement space 23 to release the meshed state between the tooth surface 18a of the floating wedge member 18 and the gear member 24. That is, the floating wedge member 18 accommodated in the retraction space 23c is in a state of being separated from the gear member 24.

Therefore, the second arm 2 becomes free (swingable) with respect to the first arm 1 and swingable in the unfolding direction, and can return to the maximum unfolded state. Then, as shown in Fig. 10(f), the gear member 24 includes a push-out projection 24g that pushes out the floating wedge member 18 accommodated in the retraction space portion 23c and brings the tooth surface 18a and the gear member 24 into a meshed state when the second arm 11 is unfolded and swung to the maximum unfolded state at a predetermined angle with respect to the first arm 13.

The push-out projection 24g is formed on the other end side (on the side opposite to the one end side where the push-back projection 24h is formed) of the gear member 24, and when the maximum unfolded state is obtained, the projection 24g presses the cutout portion 18b of the floating wedge member 18, and pushes the floating wedge member 18 out of the retraction space portion 23c, so that the state can be returned to the state in Fig. 9(a).

In other words, as for the operation of the floating wedge member 18 in the movement space 23, from the maximum unfolded state to the maximum folded state, the floating wedge member 18 can adjust the second arm 11 on the abutting portion 14a side and the first arm 13 on the gear member 24 side at any folding angle (inclination angle) and can maintain the angle due to the wedge action by being sandwiched between the gear member 24 and the abutting portion 14a, and beyond the maximum folded state, the floating wedge member 18 is pressed by the push-back projection 24h to be accommodated in the retraction space 23c of the movement space 23, so that the second arm 11 and the first arm 13 are in a freely swinging state. Then, when returned to the maximum unfolded state, the floating wedge member 18 is pressed by the push-out projection 24g to be pushed out of the retraction space portion 23c, and is again meshed with the gear member 24.

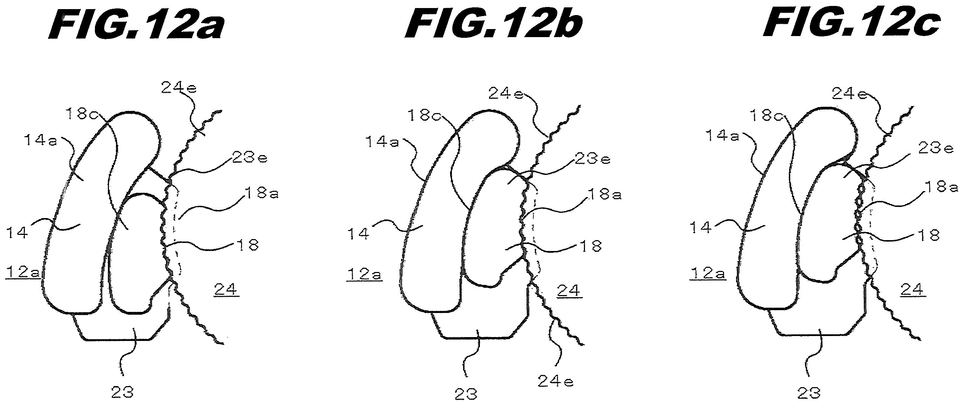

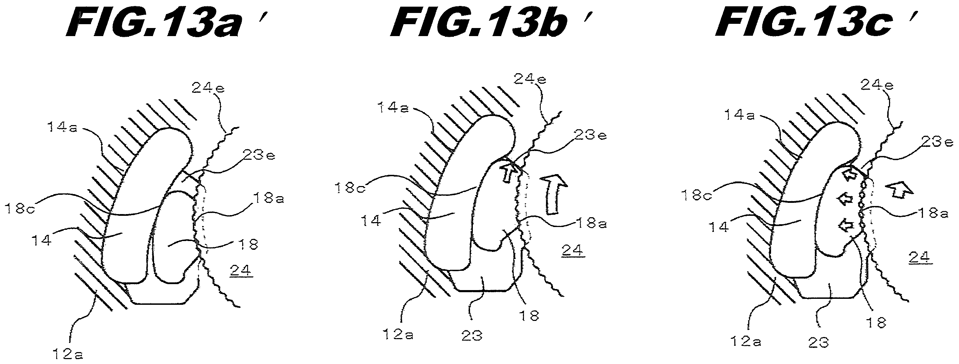

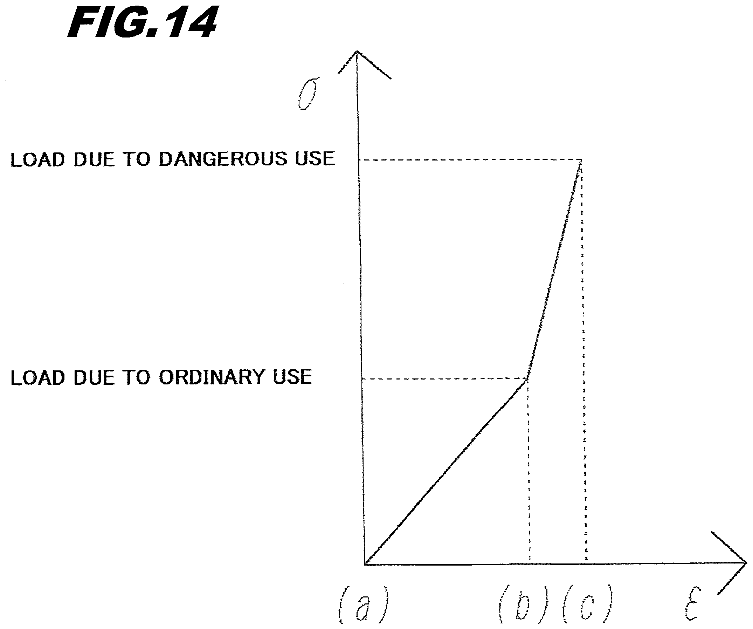

Next, with reference to Figs. 11(a) to 14, the movement and the forces to be applied of the floating wedge member 14, the gear member 24, and the insertion member 14 among the parts between the cover member 12 and the connecting portion 11b of the second arm 11 will be described when the first arm 13 and the second arm 11 are swung to each other in the case where overload is applied. Figs. 11(a) to 11(c) show how the first arm 13 swings with respect to the second arm 11, Figs. 12(a) to 12(c) respectively show the positional relationship of the floating wedge member 14, the gear member 24, the insertion member 14, the protruding portion 12a of the cover member 12 in the states in Figs. 11(a) to 11(c), and Figs. 13(a') to 13(c') respectively show the forces applied on the floating wedge member 14, the gear member 24, and the insertion member 14 in the states in Figs. 121(a) to 121(c). In addition, Fig. 14 is a graph showing the loads applied in Figs. 11(a) to 11(c).

The states in Figs. 11(a), 12(a), 13(a'), and 14(a) show states in which no load is applied. In these states, the tooth surface 24e of the gear member 24 meshes with the tooth surface 18 of the floating wedge member 18, the tooth surface 18a on the rear edge portion side (the lower side in Figs. 12(a) to 12(c)) of the floating wedge member 18 climbs over the tooth surface 24e of the gear member 24, and the gear member 24 is rotatable clockwise, but on the front edge portion side, the movement space 23 is narrowed by the tooth surface 24e and the insertion member 14, the abutting surface 18c of the floating wedge member 18 abuts on the insertion member 14 in a wedge shape, and the semi-clockwise rotation of the gear member 24 is restricted.

Next, the states in Figs. 11(b), 12(b), 13(b'), and 14(a) to 14(b) show the states in which an ordinary load is applied. From the state in which the load is not applied, when the gear member 24 rotates clockwise by a predetermined angle (see the large arrow in Fig. 13(b')) while the floating wedge member 18 remains meshed with the gear member 24, the abutting surface 18c slides together due to the fact that the front edge portion of the gear member 24 abuts in a wedge shape and that the insertion member 14 is an elastic member, and the front edge portion abuts on the abutting wall portion 23e of the movement space 23 (see also Fig. 6(b)).

Furthermore, when a load is applied in a direction in which the gear member 24 rotates clockwise as shown in Figs. 14(b) to 14(c), as shown in Figs. 11(c), 12(c), and 13(c'), the insertion member 18 is deformed substantially in the radial direction (see the small arrow in Fig. 13(c')), the tooth surface 18a of the floating wedge member 18 separates from the tooth surface 24e of the gear member 24, the tooth surface 18a climbs over the tooth surface 24e, thereby releasing the lock (see Fig. 14(c)), and clockwise rotation of the gear member 24 is available.

It should be noted in advance that the above description of Figs. 9(a) to 14(c) is also applied to the description of the positional relationship between the gear members 124, 224, and 324, the floating wedge members 118, 218, and 318, and the insertion members 114, 214, and 314, and the description of the lock release when an excessive load is applied also in the case of the second to fifth embodiments to be described below.

### [Second Embodiment]

Next, an angle adjustment tool of a second embodiment according to the present invention will be described.

### [Third Embodiment]

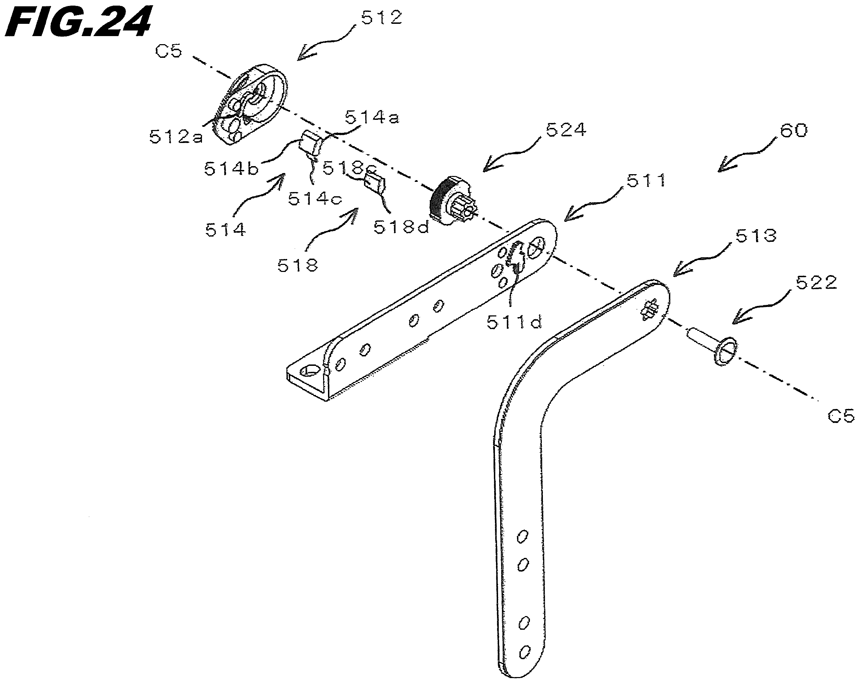

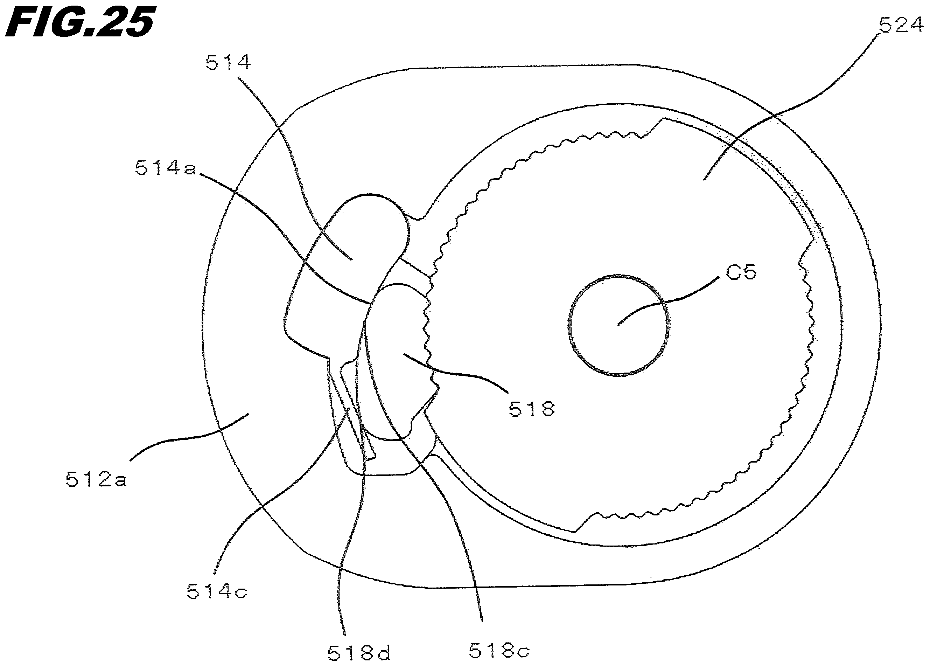

Next, the angle adjustment tool 60 of the third embodiment as a modification of the angle adjustment tool 20 of the second embodiment will be described. Figs. 24 to 25 show deformed portions of the angle adjustment tool 60 with respect to the angle adjustment tool 20, Fig. 24 is an assembly exploded view showing a connection between the first arm 513 and the second arm 511 of the angle adjustment tool 60, and Fig. 25 is a schematic plan view showing a state in which the gear member 524 is disposed in the cover member 512.

First, the angle adjustment tool 60 includes seven kinds of members, substantially, a screw 522, a first arm 513, a cover member 512, a floating wedge member 518, an insertion member 514, a gear member 524, and a second arm 511, and there is no member corresponding to the resilient member 116 of the angle adjustment tool 20 in Figs. 15 to 18, so that the number of parts is further reduced. Furthermore, the angle adjustment tool 20 in Figs. 15 to 18 is provided with, at respective facing positions with respect to the axis C1, a pair of floating wedge members 118 and 118, a pair of insertion members 114 and 114', a pair of resilient members 116 and 116', a gear member 124, a pair of receiving portions 111d and 111d' of the second arm 111, and a pair of protruding portions 112a and 112a' of the cover member 112. However, as with the angle adjustment tool 1 0 of the first embodiment, the angle adjustment tool 60 is provided with a single floating wedge member 518, an insertion member 514, a resilient member 516, a gear member 524, a receiving portion 511d of the second arm 511, and a protruding portion 512a of the cover member 512.

Unlike the insertion member 114 in Fig. 15 or the like, the insertion member 514 includes a rear edge portion 514c protruding rearward in the circumferential direction as shown in Fig. 25. The rear edge portion 514c has a function corresponding to the resilient member 116 in Fig. 15 and the like. As with Fig. 15 and the like, the abutting portion 518c of the floating wedge member 518 abuts on and separates from the abutting portion 514a of the insertion member 514. In this case, in the angle adjustment tool 20 in Fig. 15 and the like, a resilient member 116, a so-called wire spring, is attached between the abutting portion 114a of the insertion member 114 and the abutting portion 118c of the floating wedge member 118 so as to prevent the floating wedge member 118 from falling.

On the other hand, in the insertion member 514, a rear edge portion 514c having a shape protruding in the circumferential direction from the edge portion of the abutting surface 514a is integrally formed with the same material. Since the rear edge portion 514c is formed to be thinner than the insertion member 514, the rear edge portion 514c deforms even if a large force is not applied, and functions in the same manner as a wire spring. In addition, in a state where the insertion member 514 is supported by the protruding portion 512a of the cover member 512, the rear edge portion 514c protrudes beyond the end portion of the protruding portion 512a and is directed toward the floating wedge member 518. In this state, the tip of the rear edge portion 514c abuts on the abutting surface 518c of the floating wedge member 518. In particular, in order to reliably apply an elastic force of the rear edge portion 514c, it is preferable that the tip of the rear edge portion 514c abuts on the end region 518d of the abutting surface 518c. The insertion member 514 provided with the rear edge portion 514c by integral molding can eliminate the resilient members 16, 116, and the like necessary for the angle adjustment tools 10, 20, and the like, and can reduce the number of parts, the number of assembling steps, and the time and effort.

### [Fourth Embodiment]

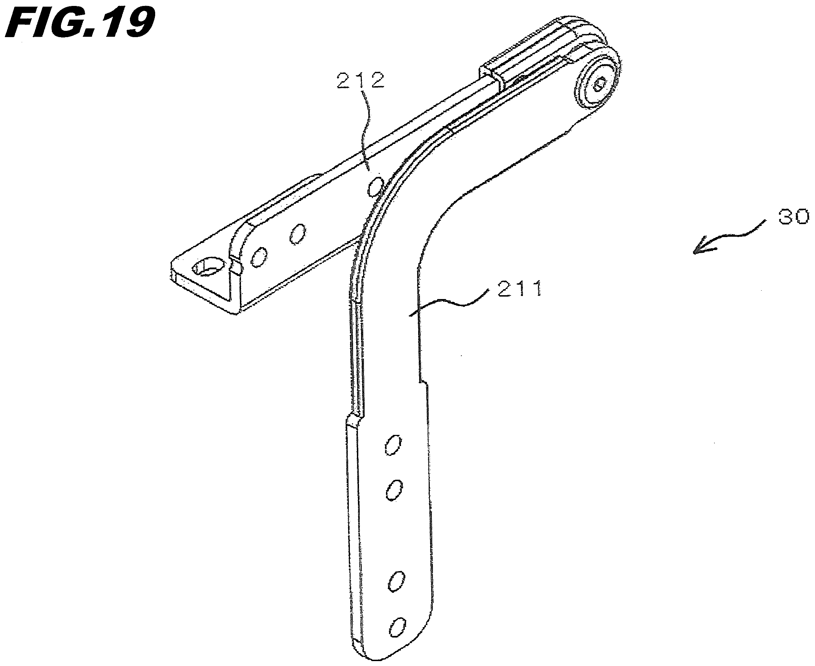

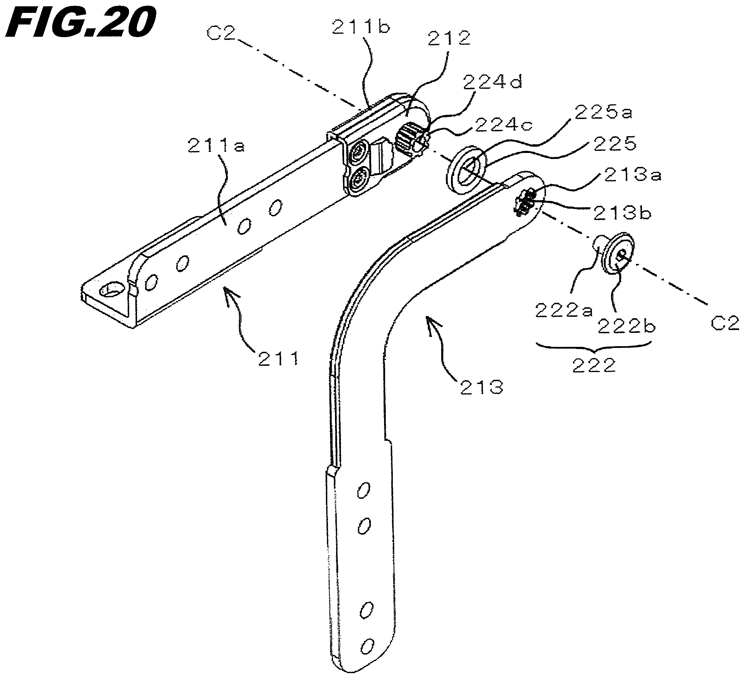

Next, an angle adjustment tool of a fourth embodiment according to the present invention will be described. Figs. 19 to 21 show the angle adjustment tool 30, Fig. 19 shows a perspective view of the angle adjustment tool 30, Fig. 20 shows an assembly exploded view showing a connection between the first arm 213 and the second arm 211 of the angle adjustment tool 30, and Fig. 21 shows an assembly exploded view showing the second arm 211 of the angle adjustment tool 30, the gear member 224 and the like inside the angle adjustment tool 30.

As shown in Figs. 20 to 21, the angle adjustment tool 30 includes eleven kinds of members, substantially, a screw 211j, a first arm 213, a cover member 212, a floating wedge member 214, an insertion member 214, a resilient member 216, a gear member 224, and a second arm 211 formed of a flat plate member 211a and a connecting member 211b. First, the second arm 211 is formed by connecting the flat plate portion 211a and the connecting portion 211b, and through holes 211 g of the flat plate portion 211a and through holes 211i of the connecting portion 211b are connected together with screws 211j to be integrally joined. In addition, the flat plate portion 211a is provided with an opening 211h located on the tip side with respect to the through holes 211g. The connecting portion 211b includes a receiving portion 211d forming a recess protruding to the left side in the X direction on the flat plate portion 211a side, a through hole 211m into which the protruding portion 224a of the gear member 224 is inserted, and an outer peripheral frame 211k surrounding the periphery (half periphery), and the bottom portion 211n of the recessed portion surrounded by the outer peripheral frame 211k serves as a counterbore and the gear member 224 rotates.

The gear member 224 has a through hole 224d as in the above-described embodiment and integrally connects the protruding portion 224a, the gear portion main body 224b, and the fitting portion 224c, and the outer end surface of the gear portion main body 224c rotates the gear member 224 around the axis C2 with the bottom portion 211n of the connecting portion 211b as a counterbore portion. As in the above-described embodiment, the floating wedge member 218 is provided with a tooth surface 218a for meshing with the tooth surface 224e of the gear member 224 and the cutout portion 218b, and is provided with an abutting portion 218c for abutting on the tip surface 211p of the second arm 211 on the outer peripheral surface on the opposite side in the Z direction. In addition, the through hole 211g side of the tip surface 211p is provided with an opening 111h extending substantially in parallel with the tip surface 211p, and the insertion member 214 having the same shape as the opening 211h is embedded.

When the pressing force is applied in the radial direction from the tip surface 211p, the insertion member 214 formed of elastic means such as resin contracts and releases the mesh between the tooth surface 224e of the gear portion main body 224b and the tooth surface 218a of the floating wedge member 218. A resilient member 216 for applying elastic force so that the floating wedge member 218 does not fall is placed between the abutting portion 218c of the floating wedge member 218 and the tip surface 211p. The cover member 212 overlaps the connecting portion 211b of the second arm 211 outward in the X direction and sandwiches the gear member 224, the floating wedge member 218, and the resilient member 216 therebetween. The cover member 212 is provided with an outer peripheral frame 212g surrounding the outer periphery and standing inside so as to abut on the outer peripheral frame 211k of the connecting portion 211b, and the recess formed with the outer peripheral frame 212g is provided with a through hole 212c.

When the cover member 212 and the connecting portion 211b are overlapped, the fitting portion 224c of the gear member 224 passes through the through hole 212c, the bottom portion of the recessed portion formed with the outer peripheral frame 212g serves as a counterbore portion, and the gear portion main body 224b rotates around the axis C2. In addition, by inserting the screw 211j into the through holes 211i and 211g and the through hole 212f to caulk the tip with the cover member 212 overlapped with the connecting portion 211b, the connecting portion 211b, the flat plate portion 211a, and the cover member 212 are integrally joined. In addition, as shown in Fig. 20, the first arm 213 is a flat plate member provided with a through hole 213a centered on the axis C2, and the inner wall of the through hole 213a is provided with a fitting groove 213b for meshing with the fitting groove 224f of the fitting portion 224c of the gear member 224. The fitting portion 224c of the gear member 224 meshes with the through hole 213a of the first arm 213 to be fixed with the cover member 212 and the connecting portion 211b sandwiched therebetween. As a result, when the first arm 213 is rotated about the axis C, the gear member 224 also rotates in cooperation therewith.

A washer 225 having a through hole 225a is inserted in the gap between the first arm 213 and the second arm 211, and penetrating the shaft member 222a of the screw 222 through the through hole 213b, the through hole 225a, and the through hole 224d to caulk the tip, and sandwiching the first arm 212, the cover member 212, the floating wedge member 214, the resilient member 216, the gear member 224, and the second arm 211 completes the assembly of the angle adjustment tool 30.

### [Fifth and Sixth Embodiments]

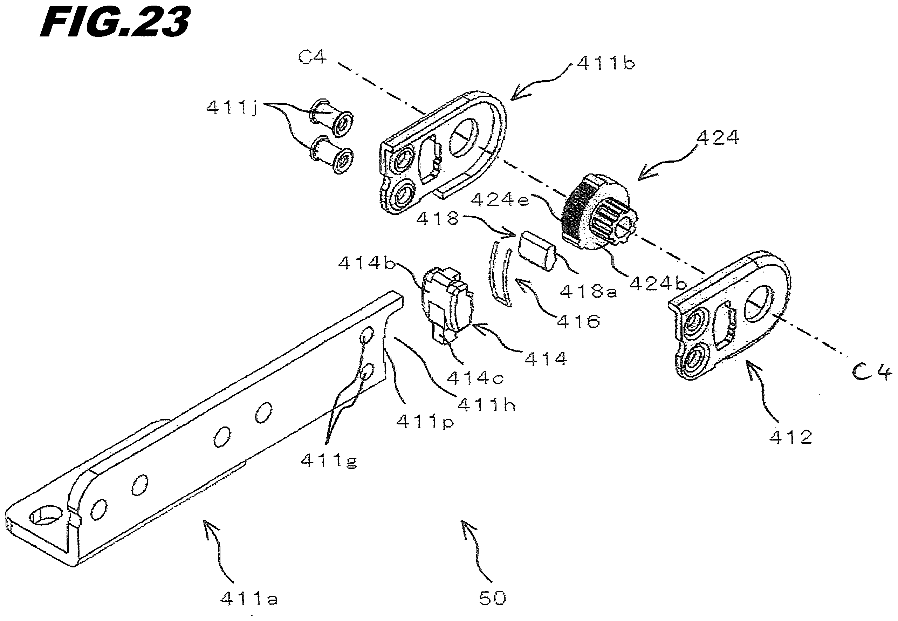

Next, angle adjustment tools of the fifth to sixth embodiments according to the present invention will be described. The angle adjustment tool 40 and 50 are different from the angle adjustment tool 10 of the fourth embodiment in the shape of the insertion members 314 and 414 and the flat plate portions 311a and 411a of the second arms 311 and 411 on which the insertion members 314 and 414 are mounted. All other component configurations are the same as those of the angle adjustment tool 30 of the fourth embodiment. Here, Figs. 22 and 23 showing the differences between the angle adjustment tools 40 and 50 are respectively shown. Each of Figs. 22 and 23 corresponds to Fig. 21 of the fourth embodiment. First, regarding the angle adjustment tool 40, the second arm 311 is formed by connecting the flat plate portion 311a and the connecting portion 311b, the through hole 311 g of the flat plate portion 311a and the through hole 311i of the connecting portion 311b are connected with the screw 311j, and the flat plate portion 311 a is provided with a cutout portion 311h opened upward in the Z direction in the tip edge portion. The cutout portion 311h has a recess shape leaving both end portions in the Y direction, and the abutting surface 314b of the insertion member 314 (the same is true for the insertion member 414) formed of the elastic means such as a resin on the end surface 311p of the cutout portion 311h is abutted and placed thereon. When a pressing force is applied in the Z direction from the end surface 311p, the insertion member 314 contracts and releases the mesh between the tooth surface 324e of the gear portion main body 324b and the tooth surface 318a of the floating wedge member 318.

Next, with regard to the angle adjustment tool 50, the second arm 411 is formed by integrally connecting the flat plate portion 411a and the connecting portion 411b with the screw 411j, and the flat plate portion 411a is provided with a notch portion 411h half-opened upward in the Z direction at the tip edge portion. The notch portion 411h has a shape in which one end portion in the Y direction is left and the other end portion is cut off, and the abutting surface 414b of the insertion member 414 is abutted and placed on the end surface 411p of the notch portion 411h. When a pressing force is applied in the Z direction from the end surface 411p, the insertion member 414 being elastic means contracts in the Z direction and releases the mesh between the tooth surface 424e of the gear portion main body 424b and the tooth surface 418a of the floating wedge member 418. In the case of the notch portion 411h, since the other end portion in the Y direction is cut off, in order to prevent movement of the insertion member 414, the end surface 411p is provided with a step 411q, and a supporting portion 414c, in which a step of the same height is provided from the abutting surface 414b of the insertion member 414, extending in the direction in which the other end portion is cut off is provided.

### [Seventh Embodiment]

Furthermore, the angle adjustment tool 70 of the seventh embodiment as modifications of the angle adjustment tools 20 and 60 of the second and third embodiments will be described. Fig. 26 shows characteristic portions of the angle adjustment tool 70 with respect to the angle adjustment tools 20 and 60, and Fig. 26 shows an assembly exploded view showing the connection between the first arm 613 and the second arm 611 of the angle adjustment tool 70.

First, the angle adjustment tool 70 includes six types of seven members, substantially, a screw 622, a first arm 613, a second arm 611, a gear member 624, a cover member 612, and a floating wedge member 618, and there are no members corresponding to the resilient member 116 of the angle adjustment tool 20 and the insertion members (elastic means) 114 and 514 of the angle adjustment tools 20 and 60, so that the number of parts is further reduced. In addition, as with the angle adjustment tool 20 in Figs. 15 to 18, the angle adjustment tool 70 is provided with, at respective facing positions with respect to the axis C6, a pair of floating wedge members 618 and 618', a gear member 624, a pair of receiving portions 611d and 611d' of the second arm 611, and a pair of protruding portions 612a and 612a' of the cover member 612.

As described above, in the angle adjustment tool 70, the insertion members 114 and 514 as in the angle adjustment tools 20 and 60 do not exist, and the cover member 612 itself is formed of an elastic material. For example, this is when the cover member 612 is injection-molded with a resin material, or even when it is a metal member, the cover member 612 is molded with metal materials having smaller elastic modulus than the floating wedge members 618 and 618', the gear member 624, the second arm 611, and the first arm 613. In this case, even when there is no separate elastic member (insertion member), the cover member 612 and the protruding portions 612h and 612h' thereof may be substitutions, and when an excessive radially outward load is applied on the floating wedge members 618 and 618', they can be elastically deformed to release the lock.

In addition, as in the angle adjustment tool 60 in Fig. 24 and the like, in the angle adjustment tool 70, there is no resilient member 116 as in the angle adjustment tool 20 in Fig. 15 and the like, and the rear edge portions 612h and 612h' integrally extending from the protruding portions 612a and 612a' of the cover member 612 have a function corresponding to the resilient member 116 in Fig. 15 and the like (see Fig. 26). The rear edge portions 612h and 612h' of the cover member 612 serves so that the abutting portions 618c and 618c' of the floating wedge member 518 does not abut or separate and the floating wedge member 118 does not fall.

Since the rear edge portions 612h and 612h' are formed to be thinner than the protruding portions 612a and 612a' as in the angle adjustment tool 60 in Figs. 24 to 25, the rear edge portions 612h and 612h' bend even when a large force is not applied, and have the function similar to the wire spring as with the resilient member 116 of the angle adjustment tool 20. Furthermore, in the angle adjustment tool 70, since the cover member 612 itself is formed of an elastic material, a pair of protruding portions provided thereon are disposed at facing positions with respect to the axis C6, and since the respective protruding portions abut on a pair of floating wedge members 618 and 618', during the lock release, a force can be divided into cancellation directions, durability is improved, and it is not necessary to provide another resilient member for each floating wedge member, and the number of parts is also reduced.

### [Eighth and Ninth Embodiments]

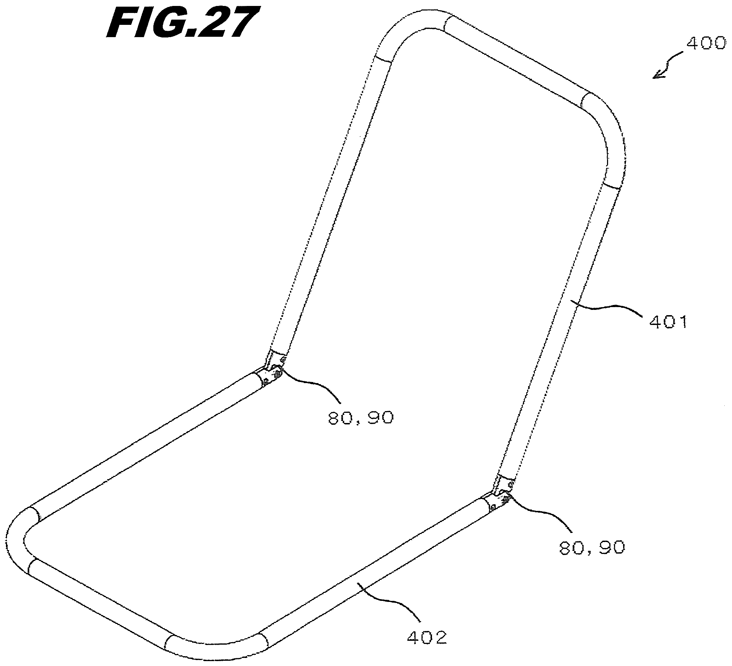

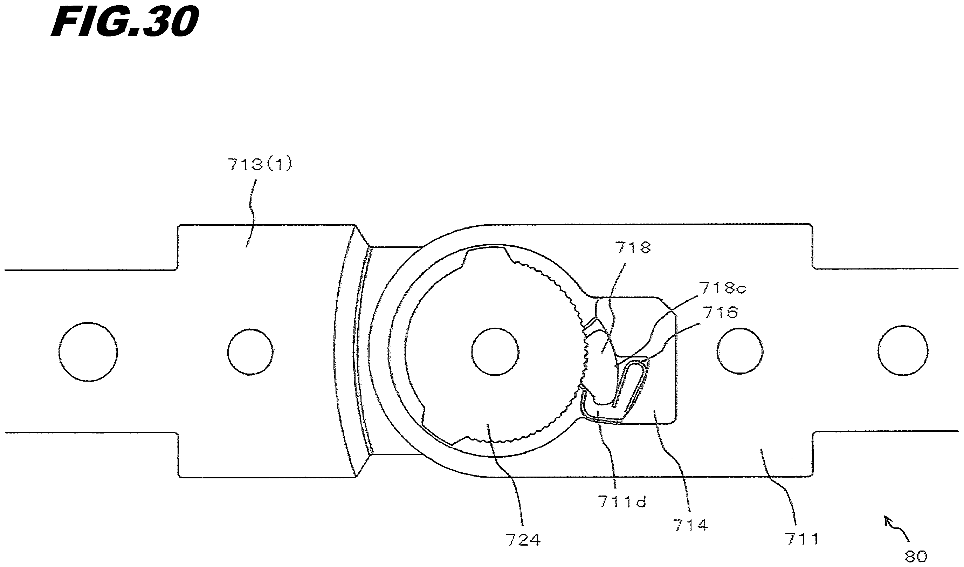

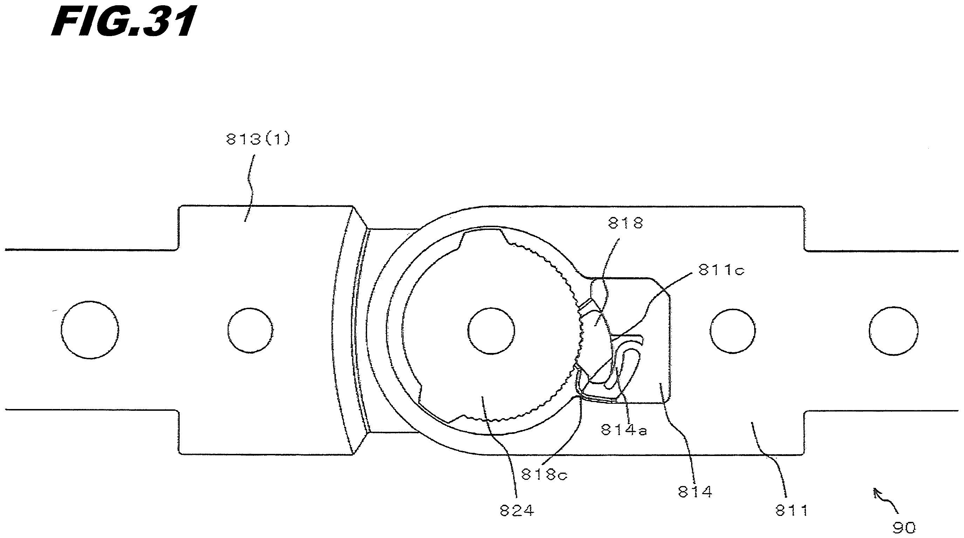

Furthermore, the angle adjustment tool 80 of the eighth and ninth embodiments as a modification of the angle adjustment tool 30 of the fourth embodiment will be described. Fig. 27 shows a usage example 400 in which the angle adjustment tools 80 and 90 are used. Fig. 28 shows a perspective view of the angle adjustment tools 80 and 90, Fig. 29 shows an assembly exploded view of the angle adjustment tool 80, Fig. 30 shows an exploded view of the angle adjustment tool 80 with the first arm member and the second arm member removed, and as with Fig. 30, Fig. 31 shows an exploded view of the angle adjustment tool 90 with the first arm member and the second arm member removed.

As an example, as shown in a usage example 400 in Fig. 27, by inserting the respective end portions of the angle adjustment tool 80 or 90 into the tubular members 401 and 402 to be swung and fixed, the angle adjustment tool 80 or 90 is used as a jig for connecting the tubular members 401 and 402.

As shown in Figs. 28 to 30, the angle adjustment tool 80 includes seven types of ten members, substantially, screws 722 and 723, a first arm first portion 713(1), a second arm first portion 711, a floating wedge member 718, an insertion member 714, a resilient member 716, a gear member 724, a second arm second portion 712, and a first arm second portion 713(2).

The second arm first portion 711 and the second arm second portion 712 respectively include a recess 711i and a recess 712d (not shown) so as to form one receiving space when overlapping with each other. In the second arm first portion 711 and the second arm second portion 712, the flat portions thereof can face each other to be overlapped, and by connecting the through hole 711j and the through hole 712f, which are seen from each other in a overlapped state, with the screw 723, the second arm first portion 711 and the second arm second portion 712 are integrally joined to form one second arm 711.

When the second arm first portion 711 and the second arm second portion 712 are overlapped to be joined, the floating wedge member 718, the insertion member 714, the resilient member 716, and the gear member 724 are sandwiched. The gear member 724 includes a through hole 724d, the protruding portion 724d and the fitting portion 224c are integrally connected to both sides of the gear portion main body 724g, the protruding portion 724d of the gear portion main body 724g is inserted into the through holes 711m and 712c of the second arm first portion 711 and the second arm second portion 712, respectively, and the gear member 724 can be rotated about the axis C7 in the counterbore portions 711n and 712n.

The floating wedge member 718 is provided with a tooth surface 718a that meshes with the tooth surface 724g of the gear member 724 and an abutting portion 718c that abuts on the insertion member 714 as in the above-described embodiments. In addition, the insertion member 714 is formed of an elastic material such as resin, and is embedded in the recesses 711d and 712d of the second arm first portion 711 and the second arm second portion 712. The insertion member 714 contracts when a pressing force is applied in the radial direction with respect to the axis C7, and releases the mesh between the tooth surface 724g of the gear portion 724 and the tooth surface 718a of the floating wedge member 718. A resilient member 716 for applying elastic force so that the floating wedge member 718 does not fall is placed between the abutting portion 718c of the floating wedge member 718 and the insertion member 714. It should be noted that, in some cases, the floating wedge member 718 and the gear member 724 are made of metal, both the second arm 711 and the insertion member 714 are integrally molded with an elastic material such as a resin, and the second arm 711 integral with the insertion member 714 elastically deforms to be unlocked.

When the second arm first portion 711 and the second arm second portion 712 are connected, since the gear member 724 sandwiched between the second arm first portion 711 and the second arm second portion 712 is supported by the through holes 711m and 712c on both sides thereof, the balance of force is good, and durability is also improved. In addition, after the second arm first portion 711 and the second arm second portion 712 are connected, the second arm first portion 711 and the second arm second portion 712 are sandwiched from both sides in the direction of the axis C7 by the first arm first portion 713(1) and the first arm second portion 713(2), and inserting the screw 722 into the through holes 713(1)c and 713(2)c to caulk the tip connects the first arm first portion 713(1) and the first arm second portion 713(2). At this time, the fitting portions 724c and 724d on both sides of the gear member 724 pass through the through holes 713(1)a and 713(2)a and are fitted into the inner wall grooves 713(1)b and 713(2)b. Therefore, when the gear member 724 rotates, together with the rotation, the first arm first portion 713(1) and the first arm second portion 713(2) also rotate as an integral first arm 713.

Therefore, in the angle adjusting tool 80, the integral first arm 713 and the second arm 712, 713 can be rotated, locked, and unlocked about the axis C7, and the tips 713(1)d and 713(2)d and the tips 711j and 712g are inserted and fixed into the annular members 402 and 401, respectively.

The angle adjustment tool 90 according to the embodiment of the present invention shown in Fig. 31 is substantially similar in configuration and usage case to the angle adjustment tool 80, but is different from the angle adjustment tool 80 in that it is not provided with resilient means. In the angle adjustment tool 90, the resilient means is integrally connected with the insertion means 814 and abuts on the rear edge side of the abutting surface 818c of the floating wedge member 818. In the case of this angle adjustment tool 90, the number of parts can be reduced by one, which facilitates the assembly process.

Although the embodiments of the angle adjustment tool according to the present invention are described above, the present invention is not limited thereto, and those skilled in the art will understand that other modifications and improvements can be obtained without departing from the spirit and teachings described in the claims, the specification, and the like.

### REFERENCE SIGNS LIST

- 10, 20, 30, 40, 50, 60, 70: angle adjustment tool
- 11, 111, 211, 311, 411, 511, 611, 711: second arm
- 12, 112, 212, 313, 412, 512, 612, 712: cover member
- 13, 113, 214, 314, 414, 513, 613, 713: first arm
- 14, 114, 214, 314, 414, 514, 714, 814: insertion member (elastic means)
- 18, 118, 218, 318, 418, 518, 618, 718, 818a: floating wedge member
- 16, 116, 216, 316, 416, 514c, 716, 816: resilient member (resilient means)
- 23, 123: movement space
- 24, 124, 224, 324, 424, 524, 624, 724, 824: gear member (gear portion)
- C, C1, C2, C3, C4, C5: axis

## Claims

1. An angle adjustment tool comprising:
a gear portion configured to rotate about an axis;
a movement space formed along an outer periphery of the gear portion; and
a floating wedge member including a tooth surface disposed in the movement space, the tooth surface capable of meshing with the gear portion and an abutting surface capable of abutting on and separating from an edge portion side of the movement space on a radially opposite side of the gear portion,
wherein the floating wedge member locks one direction of rotation about the axis of the gear portion by the abutting surface abutting on the edge portion side of the movement space to maintain a state in which the tooth surface meshes with the gear portion, and when an abutting force from the abutting surface becomes a predetermined value or more in a locked state, the floating wedge member releases a lock with an elastic force of elastic means disposed radially outward from the abutting surface causing the movement space to expand radially outward.

2. The angle adjustment tool according to claim 1, wherein the edge portion side of the movement space is formed with a member for sandwiching the gear portion from both sides in an axial direction or a part of the member, and the member for sandwiching the gear portion or the part of the member is formed of an elastic material having more flexibility than the gear portion and the floating wedge member.

3. The angle adjustment metal fitting according to claim 1 or 2, wherein
when a rotation in an opposite direction from the one direction in which the lock is made exceeds a predetermined angle, the gear portion includes a push-out protruding portion configured to push out the floating wedge member in the opposite direction,
the movement space includes a retraction space for accommodating the floating wedge member pushed out by the push-out protruding portion and releasing a meshed state between the tooth surface of the floating wedge member and the gear portion, and
the gear portion includes a push-back protruding portion for pushing back the floating wedge member accommodated in the retraction space portion and for causing the tooth surface of the floating wedge member to mesh with the gear portion when rotation is made in the one direction.

4. The angle adjustment metal fitting according to claim 1, wherein
the movement space is formed of a protruding member and a recess member, fittable to each other, in each of the members sandwiching the gear portion from both sides in the axial direction, and an elastic member disposed between the protruding member and the abutting surface of the floating wedge member, and
in an edge portion of the movement space, the protruding member receives an abutting force from the abutting surface of the floating wedge member via the elastic member.

5. The angle adjustment metal fitting according to claim 1, wherein an opening is provided in a radially outer member of the movement space, and the elastic means is inserted into the opening and contracts when a radial pressing force is applied.

6. The angle adjustment metal fitting according to claim 1, wherein
the movement space is formed with recesses for forming one receiving space when sandwiched with members facing each other in each or one of the members sandwiching the gear portion from both sides in an axial direction, and an elastic member fitted in the recess, and
the abutting surface of the floating wedge member abuts on the elastic member, and the elastic member is elastically deformed due to the abutting force, such that the movement space expands radially outward to release a lock.

7. The angle adjustment metal fitting according to any one of claims 1, 4 and 6, wherein the elastic means is integrally formed with resilient means configured to abut on the floating wedge member to impart a radial elastic force to the floating wedge member.

8. The angle adjustment metal fitting according to claim 2, wherein
the movement space is formed with a protruding member and a recess member, fittable to each other, in each of the members sandwiching the gear portion from both sides in an axial direction, and a member in which a protruding member is to be formed for sandwiching the gear portion is formed of the elastic material, and
in an edge portion of the movement space, the protruding member comes into contact with the abutting surface of the floating wedge member and receives the abutting force from the abutting surface.

9. The angle adjustment metal fitting according to any one of claims 2 to 4 and 6, wherein a pair of the movement spaces are disposed at positions facing each other with respect to the axis of the one gear member, and the protruding member forming each of the movement spaces is provided in one cover member for accommodating the gear member.

10. The angle adjustment metal fitting according to claim 1, wherein the elastic member is disposed in an edge portion of the movement space along the abutting surface of the floating wedge member on an radially outer side and contracts when a radial pressing force is applied.
